(19) **Europäisches Patentamt / European Patent Office / Office européen des brevets**

(11) **EP 2 171 723 B1**

(12) **EUROPEAN PATENT SPECIFICATION**

(45) Date of publication and mention
of the grant of the patent:
**25.03.2020 Bulletin 2020/13**

(21) Application number: **08830535.4**

(22) Date of filing: **13.06.2008**

(51) Int Cl.:
$G21G\ 1/06$ (2006.01)    $G01V\ 5/00$ (2006.01)

(86) International application number:
**PCT/US2008/066919**

(87) International publication number:
**WO 2009/035736 (19.03.2009 Gazette 2009/12)**

(54) **NON-INTRUSIVE METHOD TO IDENTIFY PRESENCE OF NUCLEAR MATERIALS USING ENERGETIC PROMPT NEUTRONS FROM PHOTON-INDUCED FISSION**

NICHT INTRUSIVES VERFAHREN ZUR IDENTIFIKATION VON NUKLEARMATERIALIEN MITHILFE ENERGETISCHER PROMPTER NEUTRONEN AUS EINER PHOTONENINDUZIERTEN FISSION

PROCÉDÉ NON INTRUSIF PERMETTANT D'IDENTIFIER LA PRÉSENCE DE MATIÈRES NUCLÉAIRES À L'AIDE DE NEUTRONS INSTANTANÉS ÉNERGÉTIQUES ISSUS D'UNE FISSION INDUITE PAR PHOTONS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.06.2007   US 944009 P**
**12.09.2007   US 971638 P**

(43) Date of publication of application:
**07.04.2010   Bulletin 2010/14**

(73) Proprietor: **Passport Systems, Inc.**
**Billerica, MA 01862 (US)**

(72) Inventors:
• **LEDOUX, Robert J.**
**Billerica, MA 01862 (US)**
• **BERTOZZI, William**
**Lexington, MA 02420 (US)**

(74) Representative: **Hibbert, Juliet Jane Grace et al**
**Kilburn & Strode LLP**
**Lacon London**
**84 Theobalds Road**
**London WC1X 8NL (GB)**

(56) References cited:
**US-A1- 2007 019 788     US-A1- 2007 102 640**
**US-A1- 2007 102 646**

• **BLACKBURN B W ET AL: "Utilization of actively-induced, prompt radiation emission for nonproliferation applications", NUCLEAR INSTRUMENTS & METHODS IN PHYSICS RESEARCH. SECTION B: BEAM INTERACTIONS WITH MATERIALS AND ATOMS, vol. 261, no. 1, 1 May 2007 (2007-05-01), pages 341-346, XP029159401, ISSN: 0168-583X, DOI: 10.1016/J.NIMB.2007.04.272**

## Description

### CROSS-REFERENCE TO RELATED APPLICATIONS

The present application claims the benefit of: (1) U.S. Provisional Patent Application Serial No. 60/944,009, entitled "Non-Intrusive Method To Identify Presence Of Nuclear Materials Using Energetic Prompt Neutrons From Photon Induced Fission" which was filed on June 14, 2007 by Robert J. Ledoux and William Bertozzi; and (2) U.S. Provisional Patent Application Serial No. 60/971,638, entitled "Non-Intrusive Method To Identify Presence Of Nuclear Materials Using Energetic Prompt Neutrons From Photon Induced Fission And Neutron-Induced Fission" which was filed on September 12, 2007 by Robert J. Ledoux and William Bertozzi.

### STATEMENT REGARDING FEDERALLY SPONSORED RESEARCH OR DEVELOPMENT

This invention was made with government support under Contract No. N66001-07-D-0025/Delivery Order No. 0001 awarded by the U.S. Navy. The government has certain rights in the invention.

### FIELD OF THE INVENTION

This disclosure relates to a method for detecting the presence of fissionable nuclear materials. The systems and methods make use of the distinctive signals provided by the energy and angular distributions of the prompt neutrons produced in photon induced fission of nuclei. They may be used to detect the presence of actinide nuclei (in particular those with Z greater than or equal to 89, that of actinium). Some of these nuclei are classified as Special Nuclear Materials (SNM) and may be used in weapons of mass destruction such as nuclear explosives and in dirty bombs.

### BACKGROUND

Illicit clandestine shipment of nuclear explosives, materials that can be employed in the fabrication of nuclear explosives, and materials that can be employed in the fabrication of dirty bombs may constitute a major threat to the peace and security of the world. Such materials may be secreted and smuggled in cargo or other shipments in various containers including ordinary luggage, crates, vehicles, cargo containers, etc. by terrorists, potential terrorists, terrorist supporters, or others. Effective and efficient methods and systems are required for the reliable, non-intrusive, detection of such contraband materials in ports and in other cargo and shipping locations in order to reduce the risk of successful illicit shipments, without unduly impeding the worldwide flow of cargo in a manner that is disruptive of normal commerce. Accordingly, it is especially important that the detection methods not produce large numbers of false positive detection events.

Passive detection methods, as for example gamma spectroscopy of natural decay, have not proven universally effective since many of the materials of interest are not highly radioactive and are relatively easily shielded. X-ray techniques do not readily distinguish between fissionable nuclear materials and innocuous high-Z materials like lead or tungsten that may be legitimately present in cargo.

In addition to passive detection, several approaches to detection have been employed, attempted, or proposed using active techniques employing probing beams.

In one such active technique, an external neutron source has been used to detect fissionable nuclear materials by detecting induced fission events by the neutron multiplication effect of the fission events. However, it has been difficult to discriminate between the probing neutrons and the fission induced prompt neutrons, especially when the energy of the probing neutrons is as high as the energy of the more energetic prompt neutrons from fission or when large containers are involved. Alternative techniques have induced fission events in fissionable nuclear materials with pulsed external neutron sources, then detecting delayed emission of neutrons by fission products, using time delay, as a means of distinguishing the detected signal from the probing neutrons. This delayed neutron signal is a much weaker signal, and is subject to signal-to-noise ratio problems.

In other active techniques, gamma ray probe beams have been employed to induce photofission ($\gamma$, f) of nuclear materials with detection of neutrons resulting from the fission events. Scattered gamma rays from the probe beam as well as photo-neutrons (direct ($\gamma$, n) events resulting from interaction of the gamma probe beam with fissionable and/or non-fissionable nuclei) induced by the probe beam contribute noise to the detection of prompt neutrons from the fission events, contributing to unreliable or ambiguous detection. Photofission also results in delayed neutron production by the fission fragments, but as with neutron-induced fission, the delayed neutron signal is weaker and detection suffers from noise problems.

Reference is also made to the article by B W Blackburn et al, entitled "Utilization of actively-induced, prompt radiation emission for nonproliferation applications", NUCLEAR INSTRUMENTS & METHODS IN PHYSICS RESEARCH. SECTION B: BEAM INTERACTIONS WITH MATERIALS AND ATOMS, (20070501), vol. 261, no. 1, pages 341 - 346.

It is therefore an object of this disclosure to provide improved methods for detecting fissionable nuclear material in an article with reduced error and ambiguity.

It is a further object of this disclosure to provide improved methods for detecting contraband fissionable nuclear materials by improving discrimination of prompt fission neutrons in the presence of noise-contributing factors.

Another object of this disclosure is to provide methods for analyzing the energy or an energy spectrum of prompt fission neutrons to detect the presence of fissionable nuclear materials in an article.

A still further object of this disclosure is to provide methods for detecting an angular distribution of prompt fission neutrons to detect the presence of fissionable nuclear materials in an article.

Yet another object of this disclosure is to provide methods for using an angular distribution of prompt fission neutrons and an energy distribution of prompt fission neutrons to detect the presence of fissionable nuclear materials in an article.

The objects set forth above as well as further and other objects and advantages of the present disclosure are achieved by the embodiments described below. The invention is set out as in the appended claims.

## SUMMARY OF THE INVENTION

A prompt neutron is a neutron emitted immediately after the fission process; it is characterized by being emitted from a fission fragment generally after the fragment has reached a significant fraction of its final velocity, and thus may be referred to as a fully accelerated fragment. The final velocity is imparted to the fragment by the strong Coulomb repulsion between the fission fragments. Some neutrons arise from photon induced fission at the point of scission (just as the fragments break apart) but these have been shown to be small in number compared to those emitted by the fragments in flight. There are also delayed neutrons that arise following the beta-decay of some of the fragments, but these are not considered herein since they are only a small percentage of the neutrons emitted promptly and thus have a negligible effect on the practice of the methods disclosed herein. One of the advantages of utilizing prompt neutrons from photo-fission as a detection technique is that they are produced with approximately 200 times the yield of delayed neutrons; this allows for higher probabilities of detection, lower false positive rates, and faster scan times.

The techniques and methods described herein make use of the boost in velocity (and thus energy) of a neutron that arises because the neutron is emitted from a rapidly moving nuclear fragment which has been produced by the ($\square$, f) process. This boost places the neutron in an energy range that will allow for the unambiguous determination of the presence of fissionable nuclei; this energy range is not possible from other processes that could occur with other non-fissionable nuclei such as direct neutron production by photons ($y$, n). Additional features of interest are the nucleus-dependent angular distribution of the fragments in the photo-fission process and the prompt neutron energy distributions at various angles. Thus the signature of photon-induced fission is unique. Also, by controlling the incident photon energy used to cause the fission, ($\gamma$, n) processes from other nuclei may be reduced in importance or eliminated as a background. Since the process of photon-induced fission is ubiquitous with the actinides, these methods will identify fissionable nuclear materials within a container, in particular those which have Z equal to or greater than 89, that of actinium.

This disclosure describes systems and methods for detecting fissile materials by measuring prompt neutron energies and examining prompt neutron energy spectra. The energy spectra of prompt neutrons that originate from photo-fission are readily distinguishable from the energy spectra of neutrons that originate from other processes that may occur in non-fissile materials such as ($\gamma$, n). Neutrons at energies greater than $E = E_b - E_{th}$, where $E_{th}$ is the threshold for the ($\gamma$, n) process in relevant other heavy non-fissile elements and $E_b$ is the endpoint energy of the incident bremsstrahlung photon beam (or the energy of an incident monochromatic photon beam), indicate with no ambiguity the presence of fissile material in the actinide region. No other photon-induced process can generate neutrons with these energies.

Angular distributions of these neutrons reflect the angular distributions of the fission fragments from which they arise: distributions deviating significantly from isotropy indicate the presence of even-even nuclei while almost isotropic distributions indicate the presence of odd-even or even-odd fissile species. (Hereinafter, in the interests of conciseness, "odd-even" shall denote a nucleus with an odd number of nucleons, whether protons or neutrons, and thus the term hereinafter shall encompass both "odd-even" nuclei and "even-odd" nuclei.)

Comparison of the energy distribution of the prompt neutrons at different angles also provides potentially useful information about the species present. If the energy distributions at different angles are nearly identical, the isotopes undergoing fission are odd-even; if the energy distributions differ significantly at different angles, the isotopes undergoing photo-fission are even-even.

Another signature of photo-fission is the fact that the relative yield of prompt neutrons at different neutron energies (i.e., the shape of the yield curve) does not depend upon the incident photon energy. This is in contrast to other processes such as ($\gamma$, n) where the relative yield of neutrons at different energies is strongly dependent on incident photon energy, particularly at the highest energies possible.

For a better understanding of the present disclosure, together with other and further objects thereof, reference is made to the accompanying drawings and detailed description.

## BRIEF DESCRIPTION OF THE DRAWINGS

Figures 1A and 1B show the fission fragment mass yields and associated average neutron multiplicities as a function of fission fragment mass resulting from neutron-induced fission of $^{235}$U and $^{239}$Pu, respectively;

Figure 2 presents the time-of-flight (and energy) spectrum of neutrons for the photo-fission of $^{232}$Th;

Figure 3 shows the energy spectra of photo-neutrons produced by the ($\gamma$, n) process from gold for bremsstrahlung beams of 14.3 and 15.8 MeV endpoint energies;

Figures 4A and 4B show the photo-fission yield as a function of bremsstrahlung endpoint energy in $^{235}$U and $^{239}$Pu, respectively;

Figures 5A, 5B, 5C, and 5D display the photon induced reaction cross sections for $^{239}$Pu for the ($\gamma$, Total), ($\gamma$, n), ($\gamma$, 2n) and ($\gamma$, f) processes, respectively;

Figure 6 shows a schematic layout of a possible arrangement for one embodiment of a system for detecting fissile materials in a container by analyzing energetic prompt neutrons resulting from photon-induced fission;

Figure 7 shows the angular distribution of the neutrons emitted from fission fragments from the photo-fission of $^{232}$Th and $^{238}$U;;

Figures 8A and 8B are schematics showing two beam positions for detecting neutrons produced by fission fragments from photon-induced fission with the angles for the detectors relative to the beam interchanged

Figure 9 shows the angular distribution of the fission fragments from the photofission of $^{232}$Th and $^{238}$U.; and

Figure 10 shows the (n, f) cross section for $^{238}$U.

Figure 11 shows pulse-shape discriminated energy spectra from HEU and Pb targets irradiated with a 9 MeV bremsstrahlung beam, illustrating the separation of photons from the neutron signal, and the separation of prompt photo-fission neutrons from neutrons produced by the ($\gamma$, n) process in Pb.

## DETAILED DESCRIPTION OF THE PREFERRED EMBODIMENTS

Fission is a complex process that has been the subject of many theoretical and experimental studies. (See generally Bohr and Mottelson, "Nuclear Structure", 1998, World Scientific Publishing Co. Pte. Ltd. Singapore, and references therein). However, common empirically established features imply certain general regularities of the process independent of nucleus or initiating particle.

When fission is spontaneous, initiated by low energy neutrons or by the absorption of photons near the threshold for the ($\gamma$, f) process, the dominant mode of fission is the breaking apart of the nucleus into two fragments of unequal masses. These unequal masses are in the regions of nucleon numbers 95 and 140 for $^{235}$U and in similar regions for other fissionable nuclei. The fragments are accelerated by the strong Coulomb repulsion of their charges ($Z_1$, $Z_2$) and gain kinetic energy ranging approximately from 160 to 180 MeV, depending on the nucleus undergoing fission. Most of this Coulomb energy is gained in approximately $10^{-22}$ sec as the fragments separate by several nuclear diameters. The final fragment velocities correspond to kinetic energies of approximately 1 MeV/ nucleon for the light fragment and approximately 0.5 MeV/nucleon for the heavy fragment. The rapidly moving fragments are generally excited and emit prompt neutrons, mostly after they have gained most of the kinetic energy available from the Coulomb repulsion.

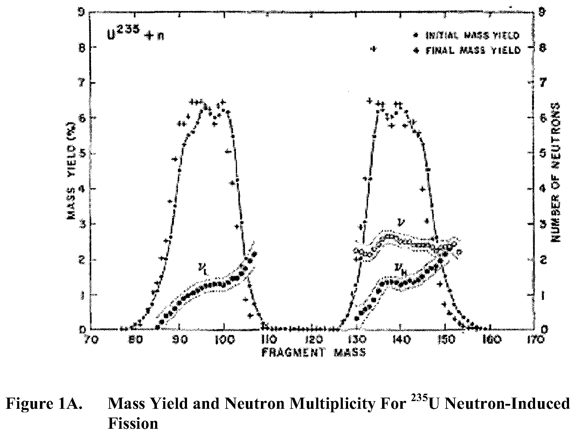

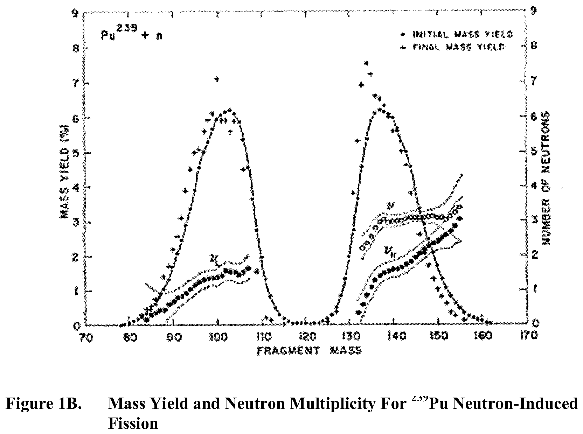

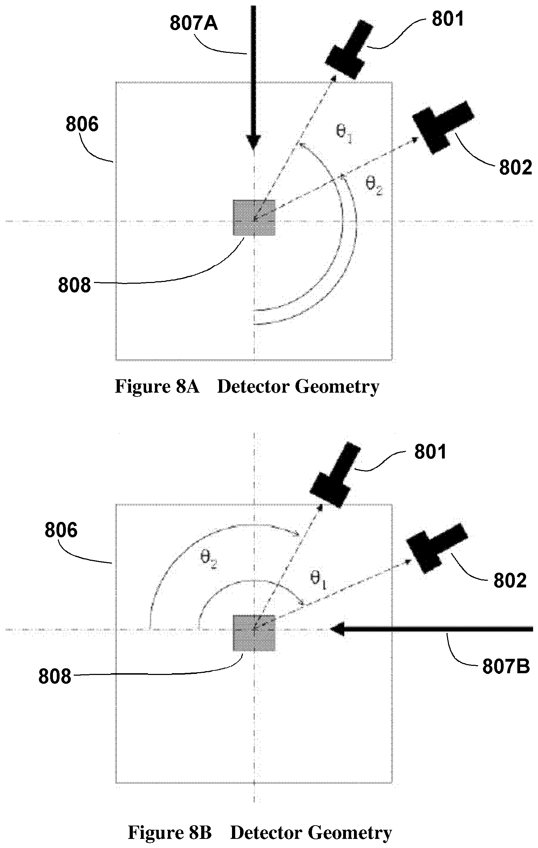

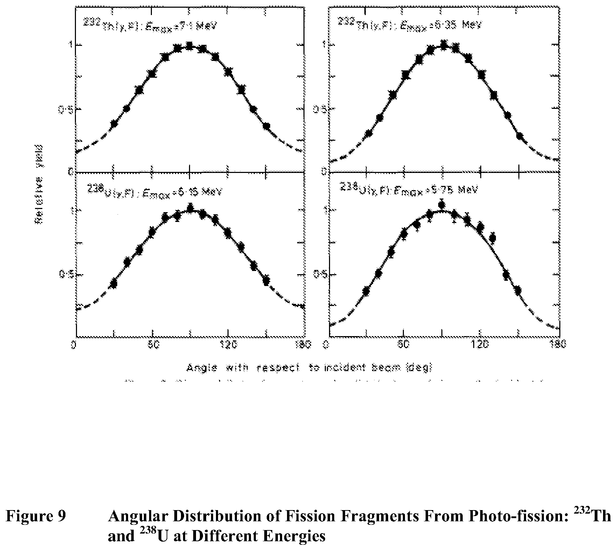

Figures 1A and 1B display the analysis by J. Terrell ("Neutron Yields from Individual Fission Fragments", Physical Review, Vol. 127, Number 3, August 1, 1962, pages 880 - 904, and references therein) for the neutron induced fission of $^{235}$U and $^{239}$Pu. These figures (which correspond to Figures 8 and 9 in Terrell) display the asymmetric fragment mass distributions from the neutron-induced fission and the average number of neutrons emitted from the heavy and light fragments, as a function of the mass of the fragments, for $^{235}$U and $^{239}$Pu. (The symbols $v$, $v_L$ and $v_H$ in Figures 1A and 1B denote the average total number of neutrons emitted, the average neutrons emitted from the light fragment and the average neutrons emitted from the heavy fragment, respectively, as a function of fragment mass.)

Similar results have been obtained by Terrell for neutron-induced fission of $^{233}U$ and the spontaneous fission of $^{252}Cf$, showing the generality of the phenomena.

Many authors have studied the spontaneous fission of $^{252}Cf$, including Harry R. Bowman, Stanley G. Thompson, J. C. D. Milton and J. Swiatecki: "Velocity and Angular Distributions of Prompt Neutrons from Spontaneous Fission of 252Cf", Phys. Rev., Volume 126, Number 6, June 15, 1962, page 2120 - 2136 and references therein. These authors were able to demonstrate by direct measurement that:

a) "The angular distribution (of the neutrons from the spontaneous fission of $^{252}Cf$) is strongly peaked in the direction of the fission fragments. The relative intensities in the direction of the light fragment, in the direction of the heavy fragment and at right angles are about 9, 5 and 1 respectively": and

b) "The broad features of the energy and angular distributions are reproduced by the assumption of isotropic evaporation (in the fragment frame of reference) of the neutrons from fully accelerated fragments."

While not the only important conclusions of the Terrell and Bowman works, those quoted and discussed here sustain the general description of spontaneous fission or fission at low energies that is important to the discussion herein.

The work of H. W. Schmitt, J. H. Neiler, and F. J. Walter, "Fragment Energy Correlation Measurements for 252Cf Spontaneous Fission and 235U Thermal-Neutron Fission", Phys. Rev. Volume 141, Number 3, January 1966, Page 1146 - 1160, provides additional evidence of the features described above. They find that the average total fragment kinetic energies before neutron emission are 186.5 ± 1.2 MeV for the spontaneous fission of $^{252}Ca$ and 171.9 ± 1.4 MeV for neutron induced fission of $^{235}U$. The fragments have substantially all the kinetic energy available from the mutual Coulomb repulsion of the fragments.

Both the energy distribution and the angular distribution of the neutrons from fission fragments created by photon-induced fission are relevant. The case of $^{232}Th$ reported in C. P. Sargent, W. Bertozzi, P. T. Demos, J. L. Matthews and W. Turchinetz, "Prompt Neutrons from Thorium Photofission", Physical Review, Volume 137, Number 1B, January 11, 1965, Pages B89 - B101 is illustrative. These authors measured the spectra of neutrons from the photo-fission of $^{232}Th$ at pairs of angles simultaneously, 157 and 77 degrees relative to the photon beam, and 130 and 50 degrees relative to the photon beam. They used bremsstrahlung photons from electrons with kinetic energies of 6.75 and 7.75 MeV. Several subsidiary facts were important in their analysis:

1.) The $(\gamma, n)$ threshold energy for $^{232}Th$ is 6.438 MeV. Therefore, the $(\gamma, n)$ process cannot contribute neutrons of energy greater than 0.31 MeV and 1.31 MeV, respectively at the two energies of the electron beam, 6.75 MeV and 7.75 MeV. Since these neutron energies are achieved only at the end points of the respective bremsstrahlung spectra, there will not be important contributions to the neutron spectra from the $(\gamma, n)$ process even at neutron energies considerably lower than 0.31 or 1.31 MeV, respectively; and

2.) The fission fragments in photo-fission, $(\gamma, f)$, are known to have strongly anisotropic angular distributions from $^{232}Th$. The distribution is peaked at 90 degrees to the incident photon beam, and the fragment angular distribution is given by $I = a + b \sin^2(\theta)$, where $\theta$ is the angle between the incident photon beam direction and the fission fragment direction. The ratio b/a is considerably larger than 1 at the energies discussed herein and remains larger than one even at incident photon energies higher than 9 MeV. (E. J. Winhold, P. T. Demos and I. Halpern, Physical Review, 87, 1139 (1952): and, A. P. Berg, R. M. Bartholomew, F. Brown, L. Katz and S. B. Kowalski, Canadian Journal of Physics, 37, 1418 (1959)). This fragment directionality provides the correlation between neutron angle and neutron energy that results from the velocity boost if the prompt neutrons are emitted from fragments that have their full kinetic energy.

The results of analysis of the neutron energy spectra from $^{232}Th$ $(\gamma, f)$ are consistent with the following conclusions of Sargent et al:

1.) The fraction of the prompt neutrons that result from emission from other than the fully accelerated fragments is 0.07 ± 0.09;

2.) The prompt neutron angular distributions and energy distributions are consistent with isotropic neutron evaporation with a thermal-type spectrum in the center of mass frame of reference of the moving fragments, where the fragments are moving with their fully accelerated velocities; and

3.) The energy spectrum of the neutrons in the center of mass frame of reference is characterized by an average energy of 1.14 ± 0.06 MeV. There are no significant components of temperature as high as or higher than this average energy. (That is, the ensuing Maxwellian energy distribution, were it applied to a fragment at rest in the laboratory frame of reference without the kinematic boost from the motion of the photo-fission fragments, would not yield many neutrons at the high energies that result from applying the kinematic boost to neutrons emitted in the fragment frame of reference.)

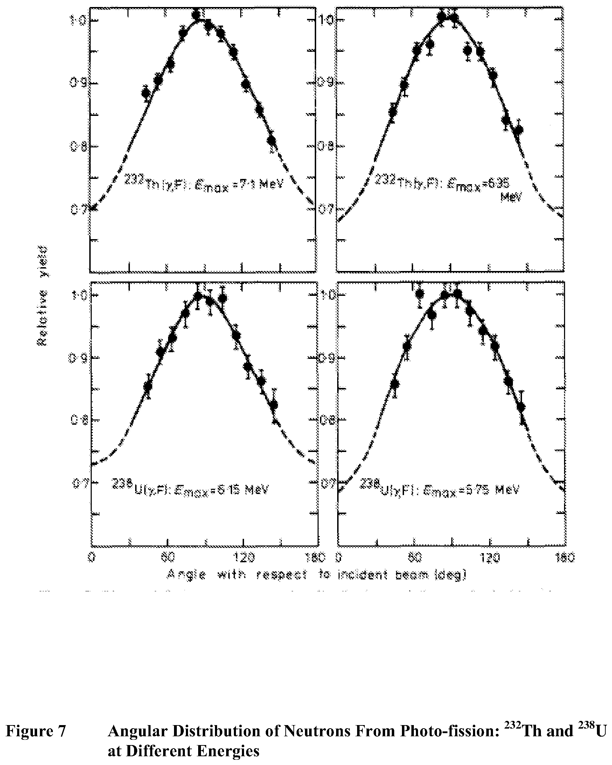

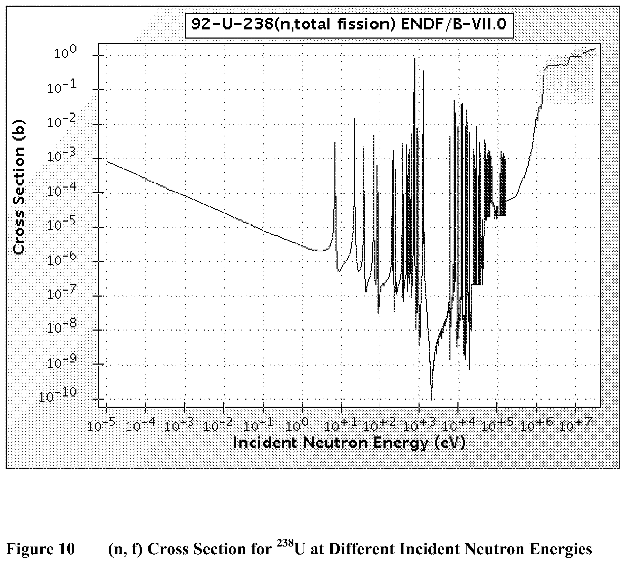

Figure 7 presents angular distributions of prompt neutrons from the fission fragments produced in the ($\gamma$, f) process for incident photon energies near the threshold for the ($\gamma$, f) process, for $^{232}$Th and $^{238}$U. It is taken from S. Nair, D. B. Gayther, B. H. Patrick and E. M. Bowey, Journal of Physics, G: Nuclear Physics, Vol 3, No. 7, 1977 (pp 1965-1978), who corroborate the relevant $^{232}$Th results of Sargent et al. and also extend the results to the photo-fission of $^{238}$U. These angular distributions are measured by detectors which detect the fragments from neutron induced fission of $^{238}$U. Therefore, they are an average over all the energies of the neutrons emitted from the photo-fission fragments convoluted with the (n, f) cross section. This emphasizes neutrons above approximately 1 MeV, where the (n, f) cross section becomes large (See Figure 10, which presents the (n, f) cross section for $^{238}$U. Figure 10 is reproduced from National Nuclear Data Center, Brookhaven National Laboratory, ENDF, Evaluated Nuclear (reaction) Data File).

Figure 9, also taken from Nair, presents the angular distributions of the fragments from the photo-fission for $^{232}$Th and $^{238}$U, for the same incident photon energies as Figure 7. The peaking of the neutrons from the photo-fission fragments in the direction of the motion of the fission fragments is clearly demonstrated by a visual comparison of Figure 7 with Figure 9. (The implications of the shape of the neutron angular distribution are discussed below.)

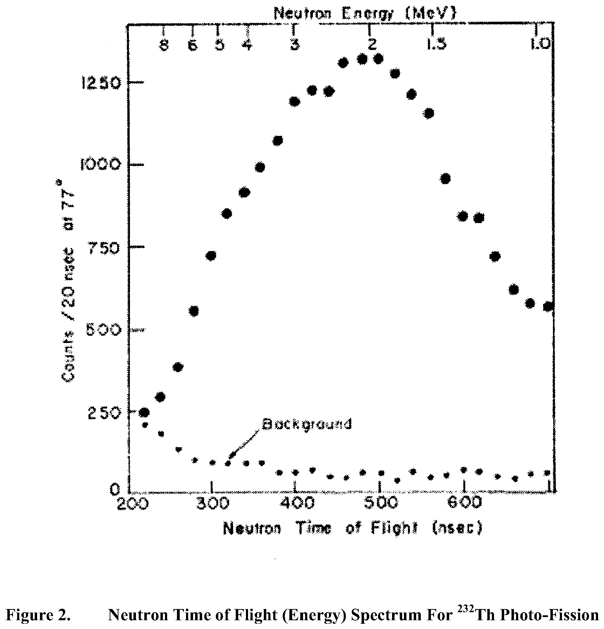

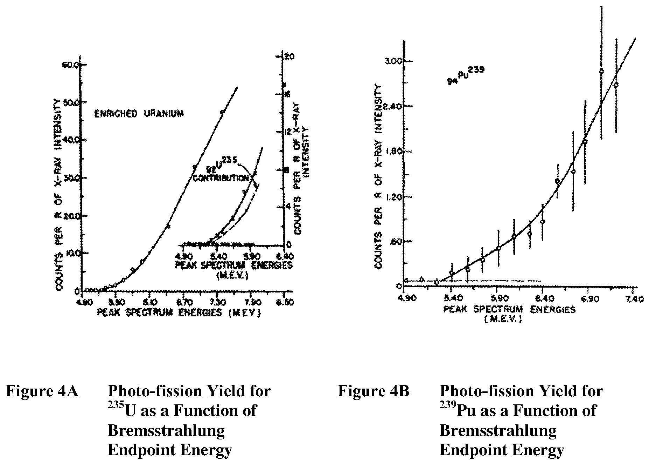

Figure 2, which is taken from figure 4 of the Sargent et al. reference, displays the time-of-flight (energy) spectrum of prompt neutrons from photo-fission of $^{232}$Th at 77 degrees with respect to the direction of an incident 7.75 MeV. photon beam. At the top of Figure 2 is the prompt neutron energy scale.

One outstanding feature of the neutron spectrum in Figure 2 is the presence of neutrons at very high energy compared to an evaporation (thermal) spectrum with an average energy of approximately 1.14 MeV, as reported by Sargent et. al. from their analysis of the energy and angular distributions of the prompt neutrons from photon induced fission of $^{232}$Th. For example, the intensity at 6 MeV is considerable. The presence of a large number of neutrons at high energy results in part from the considerable boost in velocity transferred to the neutrons by the moving fragments. For example, if the velocity of the fragment corresponds to a kinetic energy of 1 MeV/nucleon, then a 1 MeV neutron emitted in the fragment center of mass frame of reference in the direction of fragment motion will have twice the velocity in the laboratory frame of reference and a kinetic energy of 4 MeV. This follows because the neutron velocity in the laboratory frame is the sum of the fragment velocity and the neutron velocity in the fragment frame. Since these are the same for the energies and directions considered in this example, the velocity is doubled. The kinetic energy varies as the square of the velocity. Hence the neutrons with 1 MeV in the fragment frame of reference have 4 MeV in the laboratory frame of reference. More generally, if the fragment velocity is V and the co-directional neutron velocity in the fragment frame is v, then the neutron velocity in the laboratory frame is V+v. The kinetic energy of the neutron in the laboratory frame is $E = (m/2)(V^2+2Vv+v^2)$ or $E = E_f(1+2(E_n/E_f)^{0.5}+E_n/E_f)$ where $E_n$ is the neutron kinetic energy in the fragment frame and $E_f$ is the kinetic energy of one nucleon of the fragment. Thus, in the above example, a neutron emitted in the fragment direction of motion at 2 MeV in the fragment center of mass frame of reference will have a laboratory kinetic energy of 5.8 MeV.

Energy conservation in the direct ($\gamma$, n) neutron production process does not allow the production of neutrons with an energy above $E = E_b - E_{th}$, where $E_b$ is the bremsstrahlung endpoint energy of the incident photon beam and $E_{th}$ is the ($\gamma$, n) threshold energy for producing neutrons from other relevant heavy elements. Therefore, detecting neutrons with energies above this value is definitive evidence of the presence of fission.

Since the ($\gamma$,n) threshold of $^{232}$Th is 6.438 MeV, a neutron energy of 6 MeV will not be possible from ($\gamma$, n) until the bremsstrahlung endpoint reaches 12.438 MeV. Also, even when the bremsstrahlung endpoint reaches that value, neutrons from the ($\gamma$, n) process will be very small in number because they can only be produced by the few photons at the bremsstrahlung endpoint energy.

These energetic considerations apply in a similar manner for all fissionable nuclear materials, in particular for those with $Z \geq 89$, the region of the actinides. In addition, and most importantly, most heavy elements such as Bi, Pb, W, Ta, etc. have isotopes with ($\gamma$, n) thresholds at or above 6.5 MeV. Therefore, finding neutrons with energies above $E = E_b - E_{th}$ where $E_{th}$ is in the range of 6 MeV constitutes a very definitive test for the presence of fissile material.

Another test to verify that the detected neutrons result from photo-fission is the sensitivity of the yield of neutrons at energies above $E = E_b - E_{th}$ to a modest increase in incident photon energy. In particular, measuring the increase in yield relative to the yield of neutrons below this energy is significant. The increase or relative increase in neutron yield is not substantial when the neutrons are emitted from photo-fission fission fragments because energetic considerations independent of the exact incident photon energy, such as the boost in velocity from fission fragment motion, are most important in determining the yield.

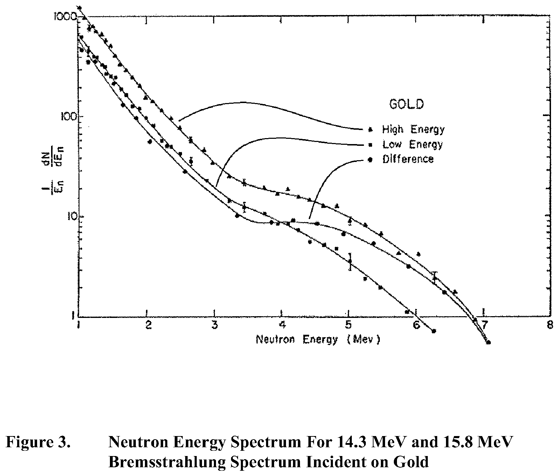

Figure 3 displays spectra of ($\gamma$, n) neutrons for gold. (It is figure 2 from W. Bertozzi, F. R. Paolini and C. P. Sargent, "Time-of-Flight Measurements of Photoneutron Energy Spectra", Physical Review, 119, 790 (1958)). Figure 3 illustrates how the nature of the (y, n) process causes neutrons produced by that process to be concentrated mostly at low energies. The data in Figure 3 are normalized to yield the same number of neutrons from the ($\gamma$, n) process in a reference target of $^2$D with neutron energies $E_n > 1.4$ MeV. Because photon and neutron energy are uniquely related in

the ($\gamma$, n) process in $^2$D, this normalization allows the formation of the difference photon spectrum (the difference between the high energy (15.8 MeV) bremsstrahlung spectrum and the low energy (14.3 MeV) bremsstrahlung spectrum), which corresponds to a broad band of photons centered at approximately 14.5 MeV and with approximately a 2 MeV half width. That is, the neutron energy spectrum produced by the difference in the neutron energy spectra at the two energies in Figure 3 corresponds to photo neutrons produced by photons in the above energy band centered at approximately 14.5 MeV. Figure 3 confirms that, because neutrons produced by the ($\gamma$, n) process are concentrated mostly at low energies, the contamination of a photo-fission spectrum by neutrons from the ($\gamma$, n) process is expected to be low at higher neutron energies, even when one looks at neutrons at energies below the $E = E_b - E_{th}$ cutoff established by the strict application of energy conservation.

The spectra in Figure 3 show the rapid, almost exponential decrease of neutrons from the ($\gamma$, n) process with increasing neutron energy, in contrast to the neutron spectrum from the photo-fission ($\gamma$, f) of $^{232}$Th at 7.75 MeV bremsstrahlung energy as shown in Figure 2. For gold the neutron spectrum from ($\gamma$, n) is nonexistent with if the bremsstrahlung spectrum endpoint is 7.75 MeV, since the ($\gamma$, n) threshold, $E_{th}$, is above 8 MeV. Even with a 12 MeV bremsstrahlung endpoint, the highest neutron energy from ($\gamma$, n) in gold would be less than 4 MeV., and neutrons in this energy range from ($\gamma$, n) would not be numerous because they would correspond to photons at the endpoint of the bremsstrahlung spectrum. The neutron yield from ($\gamma$, f) in $^{232}$Th is very large at 12 MeV bremsstrahlung for neutron energies above 6 MeV.

Table 1 gives the ($\gamma$, f) and the ($\gamma$, n) thresholds (in MeV) for some typical nuclei in the actinide region. The ($\gamma$, f) thresholds are from H. W. Koch, "Experimental Photo-Fission Thresholds in 235U, 238U, 233U, 239Pu and 232Th", Physical Review, 77, 329-336 (1950). The ($\gamma$, n) threshold of $^{207}$Pb is also listed, as it is a component in natural lead material that may be used as a shield against detection of fissile materials. The table shows the maximum neutron energy available from the ($\gamma$, n) process for bremsstrahlung end point energies up to 11 MeV, including for $^{207}$Pb. This energy is to be compared to the spectrum in Figure 3 showing many neutrons with energies in excess of 6 MeV from $^{232}$Th photo-fission using bremsstrahlung of only 7.75 MeV. Even with an 11 MeV bremsstrahlung energy there are no neutrons above 5.7 MeV from any nucleus, and no neutrons above 4.26 from $^{207}$Pb, and those at or near these energies would be very few in number because they correspond to the photons at or near the end-point energy of the bremsstrahlung spectrum. It should be noted that the ($\gamma$, f) process increases in importance as the bremsstrahlung endpoint energy increases from 6 to 11 MeV because of the increasing cross section with energy and because of the increasing number of photons in the bremsstrahlung spectrum at lower photon energies where the ($\gamma$, f) cross section is sizable. The ($\gamma$, f) thresholds are almost all lower than the ($\gamma$, n) thresholds, and are all significantly lower than the ($\gamma$, n) threshold for $^{207}$Pb.

**Table 1. Maximum Neutron Energies from ($\gamma$, n) for Selected Bremsstrahlung Energies and Isotopes.**

| | | | Maximum ($\gamma$, n) Neutron Energy (MeV) | | | | | |
|---|---|---|---|---|---|---|---|---|
| | | | Bremsstrahlung $\gamma$ Endpoint Energy, $E_b$ (MeV) | | | | | |
| Element | ($\gamma$, f) Threshold (MeV) | ($\gamma$, n) Threshold (MeV) | 6 | 7 | 8 | 9 | 10 | 11 |
| $^{232}$Th | $5.40 \pm 0.22$ | 6.438 | ------ | 0.56 | 1.56 | 2.56 | 3.56 | 4.56 |
| $^{233}$U | $5.18 \pm 0.27$ | 5.759 | 0.24 | 1.24 | 2.24 | 3.34 | 4.34 | 5.34 |
| $^{235}$U | $5.31 \pm 0.27$ | 5.298 | 0.70 | 1.70 | 2.70 | 3.70 | 4.70 | 5.70 |
| $^{238}$U | $5.08 \pm 0.15$ | 6.154 | ------ | 0.85 | 1.85 | 2.85 | 3.85 | 4.85 |
| $^{239}$Pu | $5.31 \pm 0.25$ | 5.647 | 0.35 | 1.35 | 2.35 | 3.35 | 4.35 | 5.35 |
| $^{207}$Pb | ------ | 6.738 | ------ | 0.26 | 1.26 | 2.26 | 3.26 | 4.26 |

The data in Table 1 indicates how the yield of neutrons above a specified energy would change as the bremsstrahlung endpoint energy is changed. For $^{207}$Pb, Table 1 indicates, there would be no neutron yield above 4 MeV until the electron beam energy exceeded approximately 11 MeV. (For gold, as discussed above in connection with Figure 3, the electron beam energy would have to exceed 12 MeV to provide a neutron yield above 4 MeV.) However, the yield of neutrons above 4 MeV for the actinides would be a strongly increasing function of electron beam energy starting below 6 MeV electron beam energy since the low ($\gamma$, f) threshold allows the photo-fission process to grow rapidly as more and more photons are available for photo-fission, all of them producing a neutron spectrum independent of photon energy and strongly populating the selected region of neutron energy (above 4 MeV for example). The ($\gamma$, n) process in the actinide examples shown in Table 1 or in other heavy metals such as $^{207}$Pb would not be a significant component of the total yield until the electron beam energy is well above 10 MeV since the process involves only the photons near the bremsstrahlung endpoint, $E_b$.

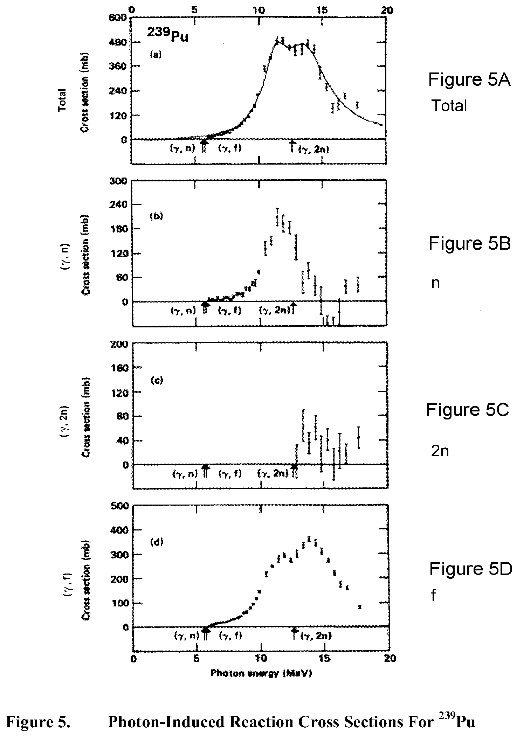

An additional point, which will be discussed further below, is that the photo-fission cross section is larger than

the $(\gamma, n)$ cross section over most photon energies by a considerable amount, as shown in Figures 5B and 5D. The neutrons from $(\gamma, f)$ will dominate $(\gamma, n)$ in most situations simply on the basis of the cross sections, aside from the other features discussed herein.

The data in Table 1 is based upon continuous bremsstrahlung spectra with specific endpoint energies, but a similar discussion applies to monochromatic photon beams. The neutron energy spectra from photo-fission retains the same dependence on neutron energy for different photon energies, but the total yield is modulated for monochromatic photons only by the cross section for $(\gamma, f)$ at the specific photon energy. In contrast, the total yield for neutron production from a bremsstrahlung beam is modulated by the convolution of the bremsstrahlung spectrum with the $(\gamma, f)$ cross section. The maximum neutron energy from $(\gamma, n)$ dictated by energy conservation considerations for monochromatic incident photons follows just as discussed above.

Other energies than 4 MeV could be used as the "trigger" or cutoff for defining the presence of fissionable nuclear material. That is, for any specific electron beam energy, a "trigger" energy can be selected such that the presence of neutrons with an energy above that "trigger" energy will be energetically impossible for the $(\gamma, n)$ process in relevant heavy materials such as $^{207}Pb$ and therefore any neutrons detected could only originate from the photo-fission process in an actinide. The data in Figure 2 show that there are many neutrons above 6 MeV from the $(\gamma, f)$ process, and hence 6 MeV could be selected as a "trigger" energy. Other "trigger" energies are possible also; the choice is dependent on factors such as the speed of detection that is desirable, the false positives that are to be allowed, and the efficiency of detection that is desired.

In addition, the choice may be dictated by the specific nature of the cargo in a container; if the cargo is made of materials with high $(\gamma, n)$ thresholds, such as copper, aluminum, steel or oxygen, then a lower trigger could be selected.

Conversely, hydrogenous material that naturally contains a small percentage of deuterium may be of concern because of its low threshold for the $(\gamma, n)$ process, 2.2 MeV. However, because the energy release is shared almost equally by the neutron and proton, the maximum neutron energy is given by $E= (E_b-2.2)/2$ MeV and, for the example of an electron beam energy of 10 MeV, the maximum neutron energy is approximately 3.9 MeV and a 9.2 Mev photon results in a neutron energy of 3.5 MeV. Thus, a higher trigger may be appropriate

A more important concern may be $^9Be$. It has a low $(\gamma, n)$ threshold of only approximately 1.6 MeV and the energy sharing results in a neutron that has most of the available energy, $E= (8/9)(E_b-1.6)$ MeV is the maximum neutron energy available. For the example of $E_b=10$ MeV, the maximum neutron energy is approximately 7.5 MeV. This high energy could present a serious background. However, one could distinguish neutrons from actinide photo-fission from neutrons from the $(\gamma, n)$ process in $^9Be$ by taking advantage of the fact that the $(\gamma, n)$ process follows the strict rule for conservation of energy, so that $E= (8/9)(E_b-1.6)$ defines the maximum neutron energy possible, while the photo-fission process has a neutron energy spectrum largely independent of the photon energy in the energy region under discussion, $E_b$ less than approximately 15 MeV. Therefore, neutrons at an energy greater than $E= (8/9)(E_b-1.6)$, where $E_b$ is the photon beam energy or bremsstrahlung endpoint energy, is proof of a fissile material. At $E_b = 10$ MeV, the presence of neutrons above approximately 7.5 MeV would be proof. At $E_b = 8$ MeV , neutrons above 5.7 MeV would be proof. Also, the prompt neutron energy spectrum is independent of the photon energy while the $(\gamma, n)$ process in $^9Be$ produces a neutron spectrum that is strongly dependent on photon energy. This difference also permits distinguishing the presence of a fissionable element from the presence of $^9Be$.

However, if there were concern that this measurement could not be reliably made, further steps could be taken. Operating at $E_b = 10$ MeV, the maximum neutron energy from beryllium $(\gamma, n)$ is approximately 7.5 MeV. By reducing the beam energy to 8 MeV, for example, the maximum energy neutron from beryllium $(\gamma, n)$ would be reduced to 5.6 MeV but the photo-fission neutron energy distribution would be unchanged. If there are neutrons above 5.6 MeV the process is unquestionably photon induced fission. If there remains any doubt that neutrons are from fission, the photon beam energy can be further reduced. For example at 5 MeV photon or bremsstrahlung beam energy there will be little or no photo-fission. But beryllium $(\gamma, n)$ will produce neutrons of up to approximately 3 MeV at that photon beam energy. The presence of these neutrons will clearly establish the presence of beryllium. From the yield of these neutrons, the contributions from beryllium to higher neutron energies when higher photon energies are used can be calculated, the neutron energy distribution from beryllium removed, and the remaining spectrum analyzed for the presence of actinide neutrons.

Fortunately, $^9Be$ is almost unique in this category. There are a few other nuclei with relatively low $(\gamma, n)$ thresholds; $^6Li$, $^{13}C$, $^{17}O$ and $^{149}Sm$ are notable among these with thresholds of 5.66, 4.95, 4.14 and 5.87 MeV, respectively. The same procedures outlined above can be used to eliminate these sources as contributors masking fissionable nuclei.

Figures 4A and 4B, from H. W. Koch, "Experimental Photo-Fission Thresholds in 235U, 238U, 233U, 239Pu and 232Th", Physical Review, 77, 329-336 (1950), figures 4 and 5, display the yield of fission fragments as a function of bremsstrahlung endpoint energy ("Peak Spectrum Energies") for two isotopes, $^{235}U$ (Figure 4A) and $^{239}Pu$ (Figure 4B). These illustrate the rapid increase of the fission yield as a function of the energy of the electron beam used to produce bremsstrahlung. Figure 4A also shows the dominance of the $^{235}U$ contribution over the impurities of $^{238}U$ in the enriched uranium sample. These data are based upon the detection of the actual photo-fission fragments. The yield of prompt neutrons follows approximately the same yield curve, since neutron emission in the photo-fission process is not dependent on the photon energy in the regions of interest below the Giant Electric Dipole Resonance at approximately 12 to 13 MeV photon energy. The emission of neutrons from the fragments is determined by the complex dynamics, discussed earlier, of splitting the fissioning nucleus into two fragments.

As a result, the shape of the yield curve of prompt neutrons of a given energy as a function of bremsstrahlung energy will be essentially independent of the neutron energy. That is, the yield curve for 6 MeV neutrons will have the same dependence on bremsstrahlung endpoint energy as the yield curve for 2 MeV, 3 MeV, 4 MeV and etc. neutrons. This is in contrast with the yield curves for neutrons from the $(\gamma, n)$ process, which will start at the endpoint energy given by $E_b = E_{th} + E_n$, where $E_n$ is the neutron energy that is desired. They are thus displaced from the $(\gamma, n)$ threshold energy, $E_{th}$, by the neutron energy, in contrast to the yield curves for $(\gamma, f)$. This is a powerful signature that the neutrons detected are from photo-fission rather than from $(\gamma, n)$.

Figures 5A through 5D display the photon induced reaction cross sections for $^{239}$Pu. They are taken from figure 7 of B. L. Berman, J. T. Caldwell, E. J. Dowdy, S. S. Dietrich, P. Meyer, and R. A. Alvarez, "Photofission and photoneutron cross sections and photofission neutron multiplicities for 233U, 234U, 237Np and 239Pu", Physical Review C Volume 34, Number 6, 2201- 2214 (1986). Figure 5A shows the total photon absorption cross section. Figure 5B shows the partial cross section for $(\gamma, In)$, single neutron emission. Figure 5C shows the partial cross section for $(\gamma, 2n)$, double neutron emission. Figure 5D shows the partial cross section for $(\gamma, f)$, photo-fission.

The photo-fission cross section (Figure 5D) is larger than the $(\gamma, n)$ cross section (Figure 5B) over most photon energies by a considerable amount. This displays the feature common to the actinides that photo-fission is a strong and often dominant process from the $(\gamma, f)$ threshold throughout much of the Giant Electric Dipole Resonance. Given that the prompt neutron multiplicities from photo-fission range from approximately 2.5 to more than 3, prompt neutrons from the photo-fission process will dominate the incident photon reaction channel by a large factor at all neutron energies. This feature facilitates identifying the presence of actinide fissionable material despite the potential presence of other heavy elements such as Pb, even without considering the energy-conservation constraints on neutron energy. The photon absorption process in most heavier nuclei is dominated by neutron emission, and the total yield is governed by the giant dipole sum rule that the integrated cross section is proportional to NZ/A, which is a slowly varying function. Since the location of the giant dipole resonance in energy also is a slowly varying function of nuclear mass, a yield of prompt neutrons from the photo-fission process that is 2.5 to 3 times the expected neutron yield from $(\gamma, n)$ is a signal of photo-fission in that the $(\gamma, f)$ neutron yield alone will produce a markedly higher photon absorption cross section than would $(\gamma, n)$ for a given quantity of heavy material. That is, measuring the yield of neutrons per heavy nucleus per photon permits identifying photo-fission as present, if the quantity of heavy material present can be determined by measuring localized density by other methods.

The angular distribution of the prompt neutrons and the relationship of the neutron energy to the fragment angular distribution also are signatures of fissile material and the photofission process, and can be used in detection schemes.

The fragment angular distributions are not as distinct for odd-even nuclei as for even-even nuclei, in part because of the high population of spin states. Odd-even nuclei angular distributions are almost isotropic as reported by L. P. Geraldo, "Angular Distribution of the Photofission Fragments of 237Np at Threshold Energy", Journal of Physics G: Nuclear Physics, 12 1423-1431 (1986), which shows angular anisotropy of approximately 10% at 5.6 MeV, 6% at 6.61 MeV and ~2% at 8.61 MeV. These results are very much in contrast with the large anisotropy for fragments from the photo-fission of even-even nuclei where ground state spins are zero. Thus, once actinide photo-fission is detected, a nearly isotropic neutron angular distribution is an indicator of an odd-even fissile species such as $^{235}$U, $^{237}$Np and $^{239}$Pu. A strongly anisotropic neutron angular distribution would indicate an even-even fissile species such as $^{232}$Th and $^{238}$U. (See S. Nair, D. B. Gayther, B. H. Patrick and E. M. Bowey, Journal of Physics, G: Nuclear Physics, Vol 3, No. 7, 1977 (pp 1965-1978) and references therein, for example.)

The energy distributions of the neutrons at various angles are themselves indicators of the fragment anisotropy, and thus of the type of nucleus. This fact was used in the analysis of the work by Sargent et al, discussed above. If the fragments are strongly anisotropic (even-even fissile species), then the energy spectra of the neutrons will show distinct differences at different directions with respect to the photon beam. As an example, if the fragments are strongly peaked at 90 degrees with respect to the photon beam, then the neutron spectrum at 90 degrees will exhibit to a different degree the boost in velocity due to the velocity of the fragments than the neutron spectrum at angles near 180 degrees or 0 degrees to the photon beam. However, if the fragment angular distribution is nearly isotropic (odd-even fissile species), then the energy distribution of the neutrons will be the same at all angles. In both situations, the higher energies reflect the motion of the fragments, but the contrast in the energy distribution of the neutrons at different angles will reflect the fragment anisotropy with angle.

The fragment angular distributions dominate the neutron angular distributions and the neutron energy distributions as a function of angle. The results of E. J. Winhold, P. T. Demos and I. Halpern, Physical Review, 87, 1139 (1952); E. J. Winhold and I. Halpern, Physical Review, 103, 990-1000 (1956); and, A. P. Berg, R. M. Bartholomew, F. Brown, L. Katz and S. B. Kowalski, Canadian Journal of Physics, 37, 1418 (1959) show the fragment angular distributions for various isotopes. The following abstract from Berg et al. is offered as a summary of the data in that paper:
Angular distributions of photofission fragments relative to the photon beam have been measured as a function of maximum bremsstrahlung energy in the range 6-20 Mev. The nuclides U-233, U-235, Np-237, Pu-239 and Am-241 give an isotropic distribution at all energies studied. The nuclides Th-232, U-234, U-236, U-238, and Pu-240 give anisotropic distributions which can be described by an equation of the form $W(\Theta) = 1 + \alpha \sin^2 \Theta$, where $\Theta$ is the angle between fragment and beam. The degree of anisotropy is large at low energy and falls rapidly as the energy is increased. At a given energy Th-232 has the greatest degree of anisotropy and Pu-240 the least.

The result quoted in the abstract is in basic agreement with that of the other papers referred to herein. In addition, some greater detail about the results from Berg et al. is shown in the two tables taken from that reference:

Angular distributions
Ratio, counts at 90°/counts at 0°*

| Nuclide | $E_0$† = 6.0 | $E_0$ = 6.5 | $E_0$ = 8.0 | $E_0$ = 10.0 | $E_0$ = 20.0 |
|---|---|---|---|---|---|
| U-233 | | | 1.048±0.07 | 1.032±0.04 | 0.994±0.03 |
| U-235 | | | 1.024±0.05 | | |
| Np-237 | | | 1.024±0.10 | | |
| Pu-239‡ | 1.034±0.26 | 0.927±0.12 | 1.002±0.06 | 1.013±0.05 | 0.952±0.03 |
| Am-241 | | | 0.958±0.07 | | |

*The ratio is the number of counts observed at 90° per unit X-ray dose divided by the number observed at 0° for the same dose.
†$E_0$ is the maximum energy in million electron volts of the bremsstrahlung spectrum.
‡The 45°/0° ratio at $E_0$ = 6.5 Mev was 1.00±0.23.

Table 2: Angular Distributions (from Berg, et al. Table I)

Corrected values of $\alpha$ in $W(\theta) = 1 + \alpha \sin^2 \theta$

| $E_0$ | Th-232 | U-238 | U-236 | U-234 | Pu-240 |
|---|---|---|---|---|---|
| 6.0 | | 6.6±2 | 6.0±2.3 | | |
| 6.3 | | 6.7±1.1 | | | |
| 6.5 | >25 | 4.4±1.0 | 2.1±0.4 | 2.3±0.6 | 0.65±0.20 |
| 7.0 | 11.0±0.8 | 2.05±0.24 | 1.33±0.17 | 0.90±0.16 | 0.49±0.12 |
| 7.5 | 10.3±1.6 | | | | |
| 8.0 | 4.9±0.6 | 1.3±0.1 | 0.79±0.09 | 0.44±0.08 | 0.29±0.07 |
| 9.0 | 2.8±0.4 | | 0.51±0.07 | | |
| 9.4 | | 0.44±0.04 | | | |
| 10.0 | 1.61±0.12 | 0.41±0.05 | 0.32±0.06 | 0.17±0.07 | |
| 14.0 | 0.46±0.09 | 0.09±0.04 | 0.04±0.03 | | |
| 15.0 | | | | 0.02±0.04* | 0.01±0.03* |
| 20.0 | 0.14±0.06 | 0.05±0.03 | | | |

*These values, which do not differ from zero, have not been corrected for isotopic composition.

Table 3: Corrected Values of $\alpha$ (from Berg, et al. Table VI)

Table 2 ("Angular Distributions...") shows that the ratio of events at 90 degrees to those at 0 degrees for the photo-fission of the odd-even isotopes shown is approximately equal to 1 over the energy range of the bremsstrahlung endpoints shown in the table. Thus, the value of b/a discussed earlier is 0 and the angular distribution is isotropic. Table 3 ("Corrected values ...") shows the fit to the normalized form of the angular distribution as exhibited in the table also as a function of bremsstrahlung endpoint. The derived angular distributions are clearly anisotropic. From these data, the quoted abstract, and the theoretical basis referred to in the references herein, the generalization is accurate; the odd-even actinides undergo isotropic photo-fission while the even-even actinides undergo anisotropic photo-fission. In particular, the result is experimentally demonstrated for the isotopes most likely to be used for a nuclear weapon, $^{235}$U, $^{239}$Pu and [237]Np. These will undergo isotropic photo-fission, in contrast to $^{238}$U, $^{232}$Th and the other even-even isotopes that were measured.

Figure 9, which displays the fission fragment angular distributions from photo-fission of an even-even nucleus, and Figure 7, which displays the angular distributions of the prompt neutrons emitted from those fragments, demonstrate the general peaking of the fragment and neutron angular distributions at 90 degrees relative to the photon beam. The neutron yield at 150 degrees is approximately 20% less than that at 90 degrees and the shape of the distribution is approximately symmetric about 90 degrees. The fragment angular distributions show a larger anisotropy as expected because the neutron distributions are produced by folding the isotropic angular distributions in the fragment center of mass with the fragment distributions in angle. In contrast to these distributions, the isotopes $^{235}$U, $^{239}$Pu and $^{237}$Np (not shown), which may be used in the manufacture of weapons, display for the most part isotropic angular distributions of the photo-fission fragments as discussed above and the resulting angular distributions of the prompt neutrons also are isotropic.

One embodiment of a detector system to carry out the methods described herein requires a source of photons with energy capable of exceeding the ($\gamma$, f) threshold and a detector for neutrons. The photons may be monochromatic, may be produced by a source capable of variable energy, or may be distributed over a broad range of energy with a good definition of the highest energy possible, such as an electron-generated bremsstrahlung spectrum in accordance with the discussion above. When an accelerator is used to provide the electrons, the electron accelerator may have the capability to vary the energy of the electron beam from below the fission barrier (threshold) to higher energies in order to exploit all the modalities discussed above.

Any neutron detector that is capable of distinguishing neutron energy is appropriate. A detector that takes advantage of energy deposition, such as proton recoil from neutron elastic scattering in a hydrogenous scintillator, is a possible choice. A detector that measures a reaction energy induced by the neutron is another possible choice. A method of measuring neutron energy by time of flight is also an appropriate detection scheme. The energy resolution required for such detection methods will have to be sufficient to eliminate neutrons from the ($\gamma$, n) process in materials other than actinides, as discussed above.

Because the contamination of non-actinide ($\gamma$, n) can be controlled and rendered small by the choice of incident photon energy (or bremsstrahlung endpoint) and neutron energy measured, the resolution required is well within a number of measurement techniques. Specific resolutions required may depend in detail on the particular situation under consideration, but resolutions of approximately 0.5 - .75 MeV at 4 to 6 MeV neutron energy may be adequate.

A detection method may be required to operate in a possible flux of photons in some embodiments, these photons being produced by scattering from the material under study in the direction of the detectors. Photons may also be produced by natural radioactivity and cosmic rays. Therefore, the neutron detectors may have to be shielded using passive and active shielding techniques.

In addition, as a consequence of the above, a neutron detector may be required to distinguish between photons and neutrons. This can be accommodated by the reaction process used, the time of flight of the photons compared to neutrons and by the ability of the detector to distinguish between the deposition of energy by heavy particles (e.g., neutrons) compared to electrons. Organic and inorganic scintillators that have different decay times according to the density of ionization produced by the passage of a charged particle may be suitable. Separation of photons from neutrons may be achieved in such scintillators utilizing signal processing techniques that exploit these different charged particle responses.

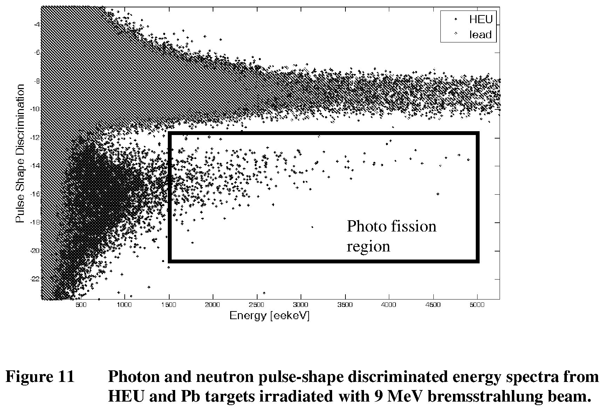

Figure 11 demonstrates the energy separation of prompt neutrons from photon induced fission from neutrons produced from the ($\square$, n) reaction, when incident photon energies below 9 MeV are used. That Figure was obtained using 9 MeV bremsstrahlung beams produced at the CW S-DALINAC at the Technical University of Darmstadt. The spectra from Pb and highly enriched uranium (HEU) targets shown in Figure 11 were obtained using the technique proposed for the CAARS PNPF module. An organic liquid scintillator was used to determine the energy deposited in the detector and to separate photon and neutron events. The lighter data points represent events from Pb (which as discussed above has a ($\square$, n) threshold of approximately 6.5 MeV for the $^{207}$Pb isotope) and the darker represent events from HEU (which has a photo-fission threshold of 5.5 MeV). The neutron events are grouped in the lower portion of the figure and are clearly differentiated from the photon events above. Within the neutron events, the box shows where the neutrons from prompt photo-fission in HEU appear unambiguously. A neutron signal in this region is an unambiguous signal of an actinide photo-fission event.

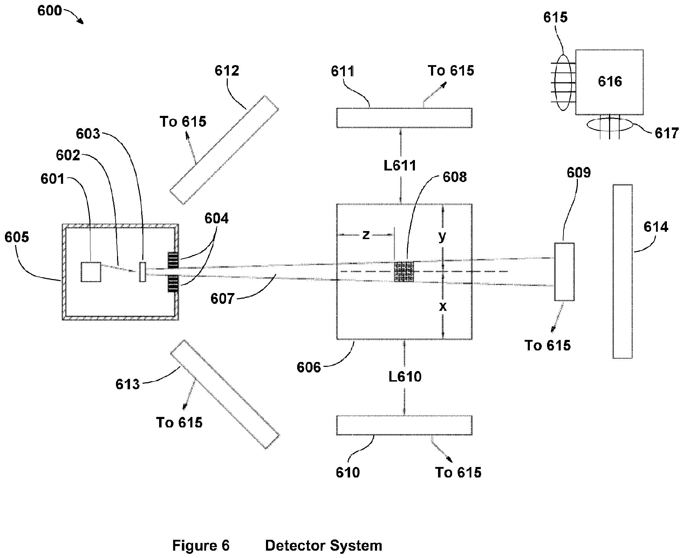

One exemplary embodiment of a system **600** for detecting fissile materials in a container by analyzing energetic prompt neutrons resulting from photon-induced fission is illustrated in Figure 6. An electron beam **602** of energy $E_b$ is generated by an electron accelerator **601**. The electron beam **602** makes bremsstrahlung radiation photons when it strikes a bremsstrahlung target **603** (also called the radiator). The electron accelerator **601** and radiator **603** optionally may be replaced by a source of monochromatic or nearly monochromatic photons. The optional collimator **604** collimates the bremsstrahlung radiation. A shield **605** may enclose the bremsstrahlung target **603** and electron accelerator **601**. The photon beam **607** is directed onto a container **606** which is to be analyzed and which may contain fissile material **608**. The distances of the fissile material **608** from (for example) three of the walls of container **606** are designated as **x, y** and **z.** A photon detector **609** placed after the container **606** optionally may be used to monitor the transmitted photon flux of photon beam **607**. Detectors **610, 611, 612,** and **613** may be placed at locations around the container **606** at approximately 90 degrees and at convenient back angles with respect to the collimated photon beam **607**. The number and location of the detectors may be varied from that shown in Figure 6 according to the principles and methods discussed above. In the illustrated embodiment, the detectors **610** and **611** may be placed at known distances **L610** and **L611** from the container **606** walls. The detectors **610, 611, 612,** and **613** optionally may be surrounded by shielding (not shown) and by anti-coincidence counting systems (not shown) if desired. The detectors **610, 611, 612,** and **613** themselves may be sensitive to neutron energy or they may be part of a system (such as one utilizing time-of-flight) that will provide a neutron energy for each detected neutron event. A beam dump **614** may be used to absorb the remaining photon flux after the photon beam **607** passes through the container **606** and its contents. The beam dump **614** and optional transmitted flux monitor, detector **609,** may be shielded from direct view of the detectors as required. Signals from the detectors **609, 610, 611, 612,** and **613** are connected by way of connections **615** to signal processing electronics and/or computer **616,** which process the detector signals and optionally may relay them and/or processed information by way of connections **617** to a central control and data analysis and storage system (not shown.) Alternatively, the detector signals may be passed directly to the central system for processing and analysis.

As an alternative to determining neutron energy directly in the neutron detector, a low duty cycle LINAC (e.g. Varian linatron) or other suitable electron accelerator may be pulsed to permit a time of flight (TOF) technique. Compared to other detection techniques, such as pulse shape discrimination using a continuous incident photon beam, the TOF method is expected to have a higher efficiency for collecting high energy neutrons, reduced environmental background, and a higher likelihood of determining angular distributions. The TOF method may use a shortened pulse structure (10 ns) and gated detectors to reject gamma flash. The advantages inherent in the TOF method, combined with the modified LINAC and detectors, may partially compensate for the reduced duty cycle of commonly deployed pulsed accelerators.

In a time-of-flight (TOF) embodiment, the electron accelerator **601** or other source may be pulsed to produce electron beam **602** (pulsed on) for a time period T and turned off for a time long enough to have all the detectable neutrons (resulting from interactions of the photon beam **607** with the container **606** and its contents) pass through the detector(s). Then the electron beam **602** may be pulsed on again for a time period T. This sequence may be repeated until the desired detection data is obtained.

The electron accelerator **601** or some subsidiary target (not shown) near the bremsstrahlung target **603** or in the bremsstrahlung or photon beam **607** may provide a fiducial signal that informs the signal processing electronics and/or computer **616** when the photon beam **607** was generated. Neutrons generated by photofission in the fissile sample **608** travel to a detector in the time L/v where L is the distance from the fissile sample **608** to the detector in question and v is the neutron velocity. For detector **611,** for example, which is opposite the fissile sample **608** at a right angle to the incident photon beam **607** in the embodiment shown, L = **L611 + y,** the distance from the fissile sample **608** to the corresponding wall of the container **606** nearest detector **611.** The velocity of the neutrons is given by v = $(2E/m)^{1/2}$, where E is the neutron kinetic energy and m is the neutron mass. The signal from detector **611** goes to the signal processing electronics and/or computer **616,** which converts the difference between the fiducial signal arrival time and the detector **611** signal arrival time into the time-of-flight (TOF) of the neutron to the detector. Using the relation TOF = (**L611+y**)/v, the signal processing electronics and/or computer **616** calculates the neutron velocity and therefore its energy ($E = mv^2/2$) and records the data and also transfers it to a central control and analysis system (not shown).

The energy resolution of the detection system will depend on the TOF of the neutrons, T, L and the dispersion of the flight distance to different portions of the detectors. Those experienced in the art will recognize that these parameters, including the electron beam pulse width T, and the geometry of the system can be adjusted to achieve energy resolution adequate for the purposes of this disclosure.

The (narrow) photon beam **607** may be scanned across the container **606** sequentially to illuminate discrete columns where the fissile sample **608** may be located. This serves to better localize the position of any fissionable material and will reduce backgrounds from other neutron producing materials in a container. Alternatively, the photon beam **607** may be a wide fan-like beam encompassing a greater region of the container **606** with the fan opening out in the direction toward the detectors at 90 degrees, for example. This allows a broad scan region of the container but limited in the narrow direction. Such an embodiment would facilitate scanning the container in shorter times for fissile materials. It would detect fissile materials distributed over the dimensions of the fan beam. In this geometry x and y will not be known but they may be inferred from a comparison of the neutron energy spectra on both sides of the container since they should be very close to identical, especially at the highest energies. Starting with any assumption for "a", such as ½ the width of the container (x = y), the resulting spectra can be adjusted by varying "a" until the spectra are made to have the same high-energy shape.

The technology for short duration electron beam pulses is a well-known art, and pulses of a few nanoseconds are readily generated for high energy electron beams. Time of flight for a 1 MeV neutron over 1 m is 72 nanoseconds. Thus, flight distances of a few meters result in flight times (~71 nanoseconds for 6 MeV neutrons over a distance of 3 meters, for example) that allow beam pulse duration times of 10 to 20 nanoseconds to separate photo-fission neutrons from those from ($\gamma$, n) processes by energy selection.

Other specific embodiments are possible and some are mentioned herein as further illustrations of methods to articulate the concepts and methods described earlier.

The detectors **610, 611, 612,** and **613** in Figure 6 can be any that are capable of unambiguously detecting a neutron. Rather than measuring the neutron time of flight to determine its energy, it would suffice in some applications to only specify that the event is definitely a neutron and that the energy is greater than a defined amount. This would characterize the neutron energy as above a defined quantity. Several such neutron energies may be involved. Together with control of the electron beam energy or photon energy as discussed above, determining the number of neutrons with energies above certain preset quantities will classify the neutrons as from photo-fission. As discussed above, other processes such as $(\gamma, n)$ will not be possible at neutron energies greater than $E = E_b - E_{th}$, where $E_b$ is the bremsstrahlung endpoint or the photon energy and $E_{th}$ is the threshold for $(\gamma, n)$ for relevant non-actinide materials that may be present and need to be distinguished from the suspected actinide.

As discussed above, the energy distribution of neutrons from photo-fission is very independent of the energy of the photons used to induce photo-fission in the photon energy regions discussed herein, in or below the Giant Electric Dipole Resonance. Another embodiment uses this fact to determine whether the neutrons originate from photo-fission. Varying the photon energy or the bremsstrahlung endpoint energy will not substantially alter the energy distribution of the neutrons from photo-fission. However, this is not true for other processes such as $(\gamma, n)$, especially in the higher regions of neutron energy, as a result of energy conservation and the requirement $E = E_b - E_{th}$ discussed earlier. Therefore, measuring the energy distribution of the neutrons for different photon energies, and comparing the results, can identify actinide photo-fission. Alternatively, measuring and comparing the number of neutrons above a certain energy as the photon energy is changed can achieve the same result.

Another embodiment would measure the neutron yield at a given neutron energy, as the photon energy is varied, and would do this for several neutron energies. This would generate yield curves for neutrons of the given energies as a function of photon energy. Because the neutron energy spectra from photon-induced fission is independent of the incident photon energy, the same yield curve as a function of photon energy would result for all neutron energies if the spectrum is dominated by photo-fission. However, if the neutron spectrum originates from $(\gamma, n)$ for relevant non-actinide materials, each neutron energy has a yield curve as a function of photon energy displaced in photon energy by that explicit neutron separation energy, in particular for the neutrons at the highest energy possible. Once again this follows from energy conservation.

Neutron detection can be based on reaction energies between the neutrons and the component materials in the detector. Detectors of such a nature may sometimes but not always be called "threshold detectors" because a reaction will occur only if the neutron energy is greater than a certain amount. Examples of such reactions include but are not limited to (n, n'γ), (n, n'f), (n, n'p), (n, n'd) and (n, n'α). Detection of the event may be based on, but not limited to, the detection of: a scintillation event and measuring the deposited energy; the charge created by ionization in a material and measuring the total charge; and, the detection of radioactive nuclei, wherein the radioactivity would be induced only if the neutron energy (energies) were greater than a certain value (or values). All such methods are included in the embodiments described in this disclosure.

As discussed above, some commercially available plastic and liquid scintillators can identify neutrons unambiguously using suitable signal processing techniques. Such detectors also have fast enough time response to qualify for the purposes herein and these will be known to those skilled in the art. Such detectors operate in part as proton recoil detectors, based on the energy imparted to protons by the elastic scattering of neutrons from the protons in the hydrogenous material. Therefore, in part, they can function as "threshold detectors" as discussed above, as well as providing the time for an event in a detector and identifying the event as a neutron. Such detection methods are part of the embodiments described herein.

Delayed neutrons following beta decay can also be detected by the methods discussed herein and serve as a method of detecting fissile materials. They will be less abundant than prompt neutrons by a very large factor, as discussed above. In most cases their presence can be used as a further detection method to augment the embodiments discussed herein. They can be distinguished from prompt neutrons by several techniques. Using TOF with a pulsed beam set to measure prompt neutrons, delayed neutrons appear as a uniform distribution in time that builds up with exposure time or the number of pulses in the TOF embodiment discussed above. The time for buildup of the delayed neutron signal is characteristic of beta-decay lifetimes. If the beam is turned off they will diminish in times characteristic of beta-decay lifetimes. The presence of the delayed neutrons may be neglected in many situations as a minor contribution. In some cases they may be used as an aid to the detection of fissile material. In all situations, the presence of delayed neutrons may be accounted for and the results corrected accordingly if the correction is required by these embodiments.

The photon beams may be of the pulsed variety described above in discussing TOF embodiments, or they may be of continuous character as from continuous duty radiofrequency accelerators, DC accelerators or similarly functioning photon sources of a monochromatic or nearly monochromatic nature.

Another scan embodiment would employ a very broad beam geometry in all directions transverse to the beam direction with collimation so as to limit the beam size to that of the container width in its largest manifestation. This embodiment would be very effective in the detection of fissile materials dispersed in small samples over a large volume, such as thin sheets broadly distributed over a large region of the container or small pellets broadly distributed.

Many beam geometries are possible, each with specific advantages for certain situations as will be recognized by those skilled in the art, and they are all included in this disclosure.

In order to carry out scanning of containers as rapidly as possible, it may be preferable to carry out an initial scan with a low threshold or trigger neutron detection energy, in order to maximize the signal from photofission, even at the cost of obtaining a signal from (γ, n) processes. If no events are recorded from the container or a portion thereof in an appropriate interval, or no events above an acceptable background, the scan can be continued to a further portion of the container, or the container can be passed on if th entire container has been scanned. If events are detected, the threshold or trigger neutron detection energy can be increased, and the container or portion thereof rescanned, using the higher neutron threshold or trigger detection energy to reduce or eliminate the contamination from the competing (γ, n) processes. Alternatively, of course, other of the methods set forth herein for discriminating between photofission and (γ, n) processes can be employed in the rescan.

Because angular distributions may be difficult to measure given the differential absorption and scattering of different cargo loadings, it is important to recognize that, as discussed above, if the energy distribution of the prompt neutrons is independent of angle relative to the photon beam, then the fragments are emitted isotropically and the fissile material is an odd-even isotope: however, if the prompt neutrons have a spectrum with greater population at the higher energies at 90 degrees to the photon beam relative to the prompt neutron spectrum at large angles near 180 degrees, then the fragments have an angular distribution peaking at 90 degrees and the fissile material is an even-even isotope. Therefore, measuring the neutron energy distribution at two angles will enable this determination to be made.

Another embodiment removes the uncertainty in the energy distribution and angular dependencies of the prompt neutrons caused by the differential absorption along different paths that neutrons take in traversing a container to the different detectors. This embodiment directs the photon beam into the container in different directions. For example, in one arrangement the photon beam may enter the container from the top and the neutron detectors view the neutrons at 100 degrees to the beam and at 170 degrees from the beam. By altering the photon beam direction to enter from the side of the container the detectors change roles. That one previously at 100 degrees is now at 170 degrees and the one previously at 170 degrees is now at 100 degrees. However, the differential aspects of neutron absorption remain exactly the same. The two measurements now provide a clear indication of the influence on the neutron energy distribution of the angle of emission of the neutron relative to the photon direction as well as the angular distribution of the neutrons relative to the photon beam direction. As one particular feature, if the photo-fission process is isotropic the relative neutron yields in the detectors will not change. A change indicates anisotropy in the original photo-fission process.

This process can be generalized for other angles as well. For example, Figures 8A and 8B, each show a container **806** with fissile material **808**. A first neutron detector **801** is shown in a first location and a second neutron detector **802** is shown in a second location. In Figure 8A, a photon beam **807A** irradiates the container **806** from a first direction (direction 1). In Figure 8B, a photon beam **807B** irradiates the container **806** from a second direction (direction 2) For each of the two photon beam directions, the neutron detectors **801** and **802** interchange angles relative to the photon beam (**807A** or **807B**) direction. For beam direction 1, first neutron detector **801** is at angle $\theta_1$ and second neutron detector **802** is at angle $\theta_2$. For beam direction 2, first neutron detector **801** is at angle $\theta_2$ and second neutron detector **802** is at angle $\theta_1$. $I_1$ and $I_2$ are the photon beam intensities at the target **808** (which may be a fissile material) for photon beam directions 1 and 2 respectively. If $S(E,\theta)$ is the energy spectrum of neutrons produced in direction $\theta$, the neutrons detected by the two detectors with photon beam direction 1 are described by the measured functions $F_i(E, \theta_j)$:

$$F_1(E,\theta_1) = I_1 \times A_1(E) \times S(E,\theta_1)$$

for first neutron detector **801;** and,

$$F_2(E,\theta_2) = I_1 \times A_2(E) \times S(E,\theta_2)$$

for second neutron detector **802.**

The neutrons detected by the two detectors with beam in direction 2 are:

$$F_1(E,\theta_2) = I_2 \times A_1(E) \times S(E,\theta_2)$$

for first neutron detector **801;** and,

$$F_2(E,\theta_1) = I_2 \times A_2(E) \times S(E,\theta_1)$$

for second neutron detector **802**.

The attenuation factors $A_1$ and $A_2$ remain invariant to the beam position and the ratio can be formed to eliminate these factors so that:

$$\{S(E,\theta_1)/\ S(E,\theta_2)\}^2 = \{\ F_1(E,\theta_1) \times F_2(E,\theta_1)\}/\{\ F_2(E,\theta_2) \times F_1(E,\theta_2)\}. \qquad \text{(Equation 1)}$$

Thus, $S(E,\theta_1)$ and $S(E,\theta_2)$ are related via measured quantities and can be compared directly. A person skilled in the art will be able generalize this technique to more than two detectors and this embodiment is intended to contain all these variations.

Unless otherwise specified, the illustrative embodiments can be understood as providing exemplary features of varying detail of certain embodiments, and therefore, unless otherwise specified, features, components, modules, and/or aspects of the embodiments can be otherwise combined, specified, interchanged, and/or rearranged without departing from the disclosed devices or methods. Additionally, the shapes and sizes of components are also exemplary, and unless otherwise specified, can be altered without affecting the disclosed devices or methods. Other specific embodiments are possible and some are mentioned herein as further illustrations of methods to articulate the concepts and methods described earlier.

Although the terms "nuclear material", "fissionable nuclear material", "fissile material", and "fissionable material" have been variously used in this disclosure, the intent of the inventors is that these terms are used interchangeably and are all intended to designate those materials that can be induced to fission by the effect of a gamma ray or by a thermal neutron or fast neutron. These terms are not intended to mean materials that emit neutrons in response to gamma or neutron irradiation, unless such materials also may be induced to fission by the effect of a gamma ray or by a thermal neutron or a fast neutron. The term "container" as used herein is intended to include any enclosure or partial enclosure that may enclose or partially enclose a fissionable material so as to hide or partly hide it or shield it or partly shield it from conventional detection methods - it includes but is not limited to cargo and shipping containers and vehicles.

**Claims**

1. A method of detecting a presence of a material (608; 808) comprising an actinide in a container (606; 806), comprising:

   a) locating the container (606; 808) such that at least one neutron detector (610, 611, 612, 613; 801,802) views the said container at a first angle relative to the photon beam (607; 807);
   b) illuminating at least a portion of the said container (606; 806) with a photon beam (607; 807) comprising photons of energies no greater than a predetermined cutoff photon energy;
   c) detecting in at least one said neutron detector (610, 611, 612, 613; 801, 802) at least some neutrons produced by an interaction of the said photon beam with at least a portion of the said container;
   d) for each of a plurality of said detected neutrons, determining the energy of said detected neutron; and
   e) based upon the determined energy of at least one of said detected neutrons exceeding a predetermined value, identifying the material comprising the actinide as present in the container;

   **characterized in that** the predetermined value is a difference between the predetermined cutoff photon energy and a lower energy; and
   wherein the lower energy is one of: a threshold energy for production of neutrons by a ($\gamma$, n) process in a specified material, no greater than a threshold energy for production of neutrons by a ($\gamma$, n) process in a specified material, a predetermined amount less than a threshold energy for production of neutrons by a ($\gamma$, n) process in a specified material, and determined based upon materials potentially present or present in the container.

2. The method of claim 1, wherein the container (606; 806) is located such that at least two neutron detectors (610, 611, 612, 613; 801, 802) view the said container, the said neutron detectors viewing the container from different angles relative to the photon beam (607; 807), and neutrons are detected in at least two said neutron detectors (610, 611, 612, 613; 801, 802); further comprising:

   f) determining a total neutron yield in at least two of said neutron detectors (610, 611, 612, 613; 801, 802) in a predetermined neutron energy range and

g) based upon comparing the said total neutron yields from the said at least two neutron detectors (610, 611, 612, 613; 801, 802) viewing the container from different angles relative to the photon beam, determining that the present actinide is an odd-even isotope if the total yields disclose an isotropic distribution of neutrons as a function of angle relative to the photon beam, and determining that the present actinide is an even-even isotope if the total yields disclose an anisotropic distribution of neutrons as a function of angle relative to the photon beam; or

f) determining a neutron energy distribution in at least two of said neutron detectors (610, 611, 612, 613; 801, 802) and

g) based upon comparing the said neutron energy distributions from the said at least two neutron detectors (610, 611, 612, 613; 801, 802) viewing the container from different angles relative to the photon beam (607; 807), determining that the present actinide is an odd-even isotope if the energy distributions do not change by more than a predetermined amount as a function of angle relative to the photon beam, and determining that the present actinide is an even-even isotope if the energy distributions change by more than a predetermined amount as a function of angle relative to the photon beam.

3. The method of claim 1, further comprising:

f) illuminating at least a portion of the said container (606) with at least one additional photon beam (807B) comprising photons of energies no greater than a different predetermined cutoff photon energy;

g) detecting in at least one said neutron detector (610, 611, 612, 613; 801, 802) at least some neutrons produced by an interaction of the said photon beam with at least a portion of the said container;

h) for each of a plurality of said detected neutrons, determining the energy of the said detected neutron;

i) choosing a higher neutron energy region where neutrons from a $(\gamma, n)$ process are not energetically permitted for any of said predetermined cutoff photon energies, and a lower energy region where neutrons from a $(\gamma, n)$ process are energetically permitted for all of said predetermined cutoff photon energies;

j) for each said predetermined cutoff photon energy, determining a neutron yield in one of said neutron detectors in at least two predetermined neutron energy ranges, wherein at least one predetermined neutron energy range encompasses the higher energy region where neutrons from a $(\gamma, n)$ process are not energetically permitted; and wherein at least one other predetermined neutron energy range encompasses the lower energy region where neutrons from a $(\gamma, n)$ process are energetically permitted; and

k) based upon comparing the said determined neutron yields in the said one neutron detector, resulting from the said incident photon beams comprising photons of energies no greater than said different predetermined cutoff energies, confirming that the material comprising the present actinide is present in the container if an increase in the said neutron yield between a lower predetermined cutoff photon energy and a higher predetermined cutoff photon energy, in the higher predetermined neutron energy range where neutrons from a $(\gamma, n)$ process are not energetically permitted, is not substantial in comparison to an increase in neutron yield in the lower predetermined neutron energy range, where neutrons from a $(\gamma, n)$ process are energetically permitted.

4. The method of claim 1, further comprising:

f) illuminating at least a portion of the said container (606; 806) with at least one additional photon beam (807B) comprising photons of energies no greater than a different predetermined cutoff photon energy;

g) detecting in at least one said neutron detector (610, 611, 612, 613; 801, 802) at least some neutrons produced by an interaction of the said photon beam with at least a portion of the said container;

h) for each of a plurality of said detected neutrons, determining the energy of the said detected neutron;

i) for at least two of said predetermined cutoff photon energies, determining a neutron energy distribution in one of said neutron detectors; and

j) based upon comparing the said determined neutron energy distributions in the said one neutron detector (610, 611, 612, 613; 801, 802), resulting from the said incident photon beams comprising photons of energies no greater than said different predetermined cutoff energies, confirming that the material comprising the present actinide is present in the container if the said neutron energy distributions change by no more than a predetermined amount as a function of cutoff photon energy.

5. The method of claim 1, further comprising:

f) illuminating at least a portion of the said container (606; 806) with at least one additional photon beam (807B) comprising photons of energies no greater than a different predetermined cutoff photon energy;

g) detecting in at least one said neutron detector (610, 611, 612, 613; 801, 802) at least some neutrons produced by an interaction of the said photon beam with at least a portion of the said container;

h) for each of a plurality of said detected neutrons, determining the energy of the said detected neutron;

i) for each said predetermined cutoff photon energy, determining a neutron yield in one of said neutron detectors in a plurality of predetermined neutron energy ranges;

j) for each said predetermined neutron energy range; determining a neutron yield curve as a function of photon cutoff energy; and

k) based upon comparing the said determined neutron yield curves in the said one neutron detector for the said predetermined neutron energy ranges, confirming that the material comprising the present actinide is present in the container if the said neutron yield curves change by no more than a predetermined amount as a function of neutron energy.

6. A method according to any preceding claim wherein determining the energy of detected neutron comprises determining a minimum energy of said detected neutron.

7. The method of claim 1 or 6, further comprising:

f) for at least one new angle relative to the photon beam,

i) moving at least one of said neutron detectors (610, 611, 612, 613; 801, 802) such that the said moved neutron detector views the said container from the said new angle relative to the photon beam (607; 807);

ii) illuminating at least a portion of the said container with the photon beam comprising photons of energies no greater than the predetermined cutoff photon energy;

iii) detecting in said at least one moved neutron detector (610, 611, 612, 613; 801, 802) at least some neutrons produced by an interaction of the said photon beam with at least a portion of the said container; and

iv) for each of a plurality of said detected neutrons, determining the energy of the said detected neutron;

g) for at least some of said neutron detector viewing angles relative to the photon beam (607; 807), determining a total neutron yield in the said at least one moved neutron detector in a predetermined neutron energy range at the said angle relative to the photon beam: and

h) based upon comparing the said total neutron yields, from the said at least one moved neutron detector, for at least some of the neutron detector viewing angles relative to the photon beam, determining that the present actinide is an odd-even isotope if the total yields disclose an isotropic distribution of neutrons as a function of angle relative to the photon beam, and determining that the present actinide is an even-even isotope if the total yields disclose an anisotropic distribution of neutrons as a function of angle relative to the photon beam.

8. The method of claim 1 or claim 6, further comprising:

f) for at least one new angle relative to the photon beam (607; 807),

i) moving at least one of said neutron detectors (610, 611, 612, 613; 801, 802) such that the said moved neutron detector views the said container (606; 806) from the said new angle relative to the photon beam (607; 807);

ii) illuminating at least a portion of the said container (606; 806) with the photon beam (607; 807) comprising photons of energies no greater than the first predetermined cutoff photon energy;

iii) detecting in said at least one moved neutron detector (610, 611, 612, 613; 801, 802) at least some neutrons produced by an interaction of the said photon beam with at least a portion of the said container; and

iv) for each of a plurality of said detected neutrons, determining the energy of the said detected neutron;

g) for at least some of said neutron detector viewing angles relative to the photon beam, determining a neutron energy distribution in the said at least one moved neutron detector in a predetermined neutron energy range at the said angle relative to the photon beam; and

h) based upon comparing the said neutron energy distributions from the said at least one moved neutron detector, for at least some of the neutron detector viewing angles relative to the photon beam, determining that the present actinide is an odd-even isotope if the energy distributions do not change by more than a predetermined amount as a function of angle relative to the photon beam, and determining that the present actinide is an even-even isotope if the energy distributions change by more than a predetermined amount as a function of angle relative to the photon beam.

9. The method of claim 1 or 6, wherein the photon beam (607; 807) comprising photons of energies no greater than the predetermined cutoff photon energy is a bremsstrahlung beam produced by electrons of the predetermined cutoff energy or a monochromatic photon beam.

10. The method of claim 1 or 6, wherein determining the energy of the said detected neutron comprises measuring a time of flight of the said detected neutron.

11. The method of claim 1 or 6, wherein determining the energy of the said detected neutron comprises analyzing the energy deposited in at least one of said neutron detectors (610, 611, 612, 613; 801, 802).


**Patentansprüche**

1. Verfahren zum Erfassen eines Vorhandenseins eines ein Actinoid umfassenden Materials (608; 808) in einem Behälter (606; 806), umfassend:

a) Anordnen des Behälters (606; 808) derart, dass mindestens eine Neutronenerfassungseinrichtung (610, 611, 612, 613; 801, 802) den Behälter in einem ersten Winkel relativ zu dem Photonenstrahl (607; 807) betrachtet,
b) Beleuchten zumindest eines Abschnitts des Behälters (606; 806) mit einem Photonenstrahl (607; 807), der Photonen mit Energien umfasst, die nicht größer sind als eine vorab bestimmte Photonengrenzenergie,
c) in mindestens einer solchen Neutronenerfassungseinrichtung (610, 611, 612, 613; 801, 802) erfolgendes Erfassen zumindest einiger durch eine Wechselwirkung des Photonenstrahls mit zumindest einem Abschnitt des Behälters erzeugter Neutronen,
d) für jedes einer Vielzahl der erfassten Neutronen erfolgendes Bestimmen der Energie des erfassten Neutrons und
e) basierend darauf, dass die bestimmte Energie mindestens eines der erfassten Neutronen einen vorab bestimmten Wert überschreitet, erfolgendes Erkennen des das Actinoid umfassenden Materials als in dem Behälter vorhanden,

**dadurch gekennzeichnet, dass** es sich bei dem vorab bestimmten Wert um eine Differenz zwischen der vorab bestimmten Photonengrenzenergie und einer niedrigeren Energie handelt, und
wobei es sich bei der niedrigeren Energie um eines der Folgenden handelt: eine Schwellenenergie zur Erzeugung von Neutronen durch einen $(\gamma, n)$-Prozess in einem vorgegebenen Material, nicht größer als eine Schwellenenergie zur Erzeugung von Neutronen durch einen $(\gamma, n)$-Prozess in einem vorgegebenen Material, um einen vorab bestimmten Betrag geringer als eine Schwellenenergie zur Erzeugung von Neutronen durch einen $(\gamma, n)$-Prozess in einem vorgegebenen Material, und bestimmt auf Grundlage in dem Behälter möglicherweise vorhandener oder vorhandener Materialien.

2. Verfahren nach Anspruch 1, wobei der Behälter (606; 806) derart angeordnet wird, dass mindestens zwei Neutronenerfassungseinrichtungen (610, 611, 612, 613; 801, 802) den Behälter betrachten, wobei die Neutronenerfassungseinrichtungen den Behälter aus verschiedenen Winkeln relativ zu dem Photonenstrahl (607; 807) betrachten und Neutronen in mindestens zwei solchen Neutronenerfassungseinrichtungen (610, 611, 612, 613; 801; 802) erfasst werden, ferner umfassend:

f) Bestimmen einer Neutronengesamtmenge in mindestens zweien der Neutronenerfassungseinrichtungen (610, 611, 612, 613; 801, 802) in einem vorab bestimmten Neutronenenergiebereich und
g) auf Grundlage eines Vergleichens der zwei Neutronengesamtmengen aus den mindestens zwei den Behälter aus verschiedenen Winkeln relativ zu dem Photonenstrahl betrachtenden Neutronenerfassungseinrichtungen (610, 611, 612, 613; 801, 802) erfolgendes Bestimmen, dass es sich bei dem vorhandenen Actinoid um ein Ungerade-gerade-Isotop handelt, falls die Gesamtmengen in Abhängigkeit vom Winkel relativ zu dem Photonenstrahl eine isotrope Verteilung von Neutronen offenbaren, und Bestimmen, dass es sich bei dem vorhandenen Actinoid um ein Gerade-gerade-Isotop handelt, falls die Gesamtmengen in Abhängigkeit vom Winkel relativ zu dem Photonenstrahl eine anisotrope Verteilung von Neutronen offenbaren, oder
f) Bestimmen einer Neutronenenergieverteilung in mindestens zweien der Neutronenerfassungseinrichtungen (610, 611, 612; 801, 802) und
g) auf Grundlage eines Vergleichens der Neutronenenergieverteilungen aus den mindestens zwei den Behälter aus verschiedenen Winkeln relativ zu dem Photonenstrahl (607; 807) betrachtenden Neutronenerfassungseinrichtungen (610, 611, 612, 613; 801, 802) erfolgendes Bestimmen, dass es sich bei dem vorhandenen Actinoid

18

um ein Ungerade-gerade-Isotop handelt, falls sich die Energieverteilungen in Abhängigkeit vom Winkel relativ zu dem Photonenstrahl um nicht mehr als einen vorab bestimmten Betrag ändern, und Bestimmen, dass es sich bei dem vorhandenen Actinoid um ein Gerade-gerade-Isotop handelt, falls sich die Energieverteilungen in Abhängigkeit vom Winkel relativ zu dem Photonenstrahl um mehr als einen vorab bestimmten Betrag ändern.

3.  Verfahren nach Anspruch 1, ferner umfassend:

f) Beleuchten zumindest eines Abschnitts des Behälters (606) mit mindestens einem zusätzlichen Photonenstrahl (807B), der Photonen mit Energien umfasst, die nicht größer sind als eine andere vorab bestimmte Photonengrenzenergie,

g) in mindestens einer solchen Neutronenerfassungseinrichtung (610, 611, 612, 613; 801, 802) erfolgendes Erfassen zumindest einiger durch eine Wechselwirkung des Photonenstrahls mit zumindest einem Abschnitt des Behälters erzeugter Neutronen,

h) für jedes einer Vielzahl der erfassten Neutronen erfolgendes Bestimmen der Energie des erfassten Neutrons und

i) Wählen einer höheren Neutronenenergieregion, in der Neutronen aus einem ($\gamma$, n)-Prozess für keine der vorab bestimmten Photonengrenzenergien energetisch zulässig sind, und einer niedrigeren Energieregion, in der Neutronen aus einem ($\gamma$, n) -Prozess für alle der vorab bestimmten Photonengrenzenergien energetisch zulässig sind,

j) für jede vorab bestimmte Photonengrenzenergie erfolgendes Bestimmen einer Neutronenmenge in einer der Neutronenerfassungseinrichtungen in mindestens zwei vorab bestimmten Neutronenenergiebereichen, wobei mindestens ein vorab bestimmter Neutronenenergiebereich die höhere Energieregion umfasst, in der Neutronen aus einem ($\gamma$, n)-Prozess nicht energetisch zulässig sind, und wobei mindestens ein anderer vorab bestimmter Neutronenenergiebereich die niedrigere Energieregion umfasst, in der Neutronen aus einem ($\gamma$, n)-Prozess energetisch zulässig sind, und

k) auf Grundlage eines Vergleichens der bestimmten Neutronenmengen in der einen Neutronenerfassungseinrichtung und infolgedessen, dass die einfallenden Photonenstrahlen Photonen mit Energien umfassen, die nicht größer sind als die anderen vorab bestimmten Grenzenergien, erfolgendes Bestätigen, dass das das vorhandene Actinoid umfassende Material in dem Behälter vorhanden ist, falls ein Anstieg der Neutronenmenge zwischen einer niedrigeren vorab bestimmten Photonengrenzenergie und einer höheren vorab bestimmten Photonengrenzenergie in dem höheren vorab bestimmten Neutronenenergiebereich, in dem Neutronen aus einem ($\gamma$, n)-Prozess nicht energetisch zulässig sind, gegenüber einem Anstieg der Neutronenmenge in dem niedrigeren vorab bestimmten Neutronenenergiebereich, in dem Neutronen aus einem ($\gamma$, n)-Prozess energe-tisch zulässig sind, nicht wesentlich ist.

4.  Verfahren nach Anspruch 1, ferner umfassend:

f) Beleuchten zumindest eines Abschnitts des Behälters (606; 806) mit mindestens einem zusätzlichen Photonenstrahl (807B), der Photonen mit Energien umfasst, die nicht größer sind als eine andere vorab bestimmte Photonengrenzenergie,

g) in mindestens einer solchen Neutronenerfassungseinrichtung (610, 611, 612, 613; 801, 802) erfolgendes Erfassen zumindest einiger durch eine Wechselwirkung des Photonenstrahls mit zumindest einem Abschnitt des Behälters erzeugter Neutronen,

h) für jedes einer Vielzahl der erfassten Neutronen erfolgendes Bestimmen der Energie des erfassten Neutrons,

i) für mindestens zwei der vorab bestimmten Photonengrenzenergien erfolgendes Bestimmen einer Neutronenenergieverteilung in einer der Neutronenerfassungseinrichtungen und

j) auf Grundlage eines Vergleichens der bestimmten Neutronenenergieverteilungen in der einen Neutronenerfassungseinrichtung (610, 611, 612, 613; 801, 802) und infolgedessen, dass die einfallenden Photonenstrahlen Photonen mit Energien umfassen, die nicht größer sind als die anderen vorab bestimmten Grenzenergien, erfolgendes Bestätigen, dass das das vorhandene Actinoid umfassende Material in dem Behälter vorhanden ist, falls sich die Neutronenenergieverteilungen in Abhängigkeit von der Photonengrenzenergie um nicht mehr als einen vorab bestimmten Betrag ändern.

5.  Verfahren nach Anspruch 1, ferner umfassend:

f) Beleuchten zumindest eines Abschnitts des Behälters (606; 806) mit mindestens einem zusätzlichen Photonenstrahl (807B), der Photonen mit Energien umfasst, die nicht größer sind als eine andere vorab bestimmte Photonengrenzenergie,

g) in mindestens einer solchen Neutronenerfassungseinrichtung (610, 611, 612, 613; 801, 802) erfolgendes Erfassen zumindest einiger durch eine Wechselwirkung des Photonenstrahls mit zumindest einem Abschnitt des Behälters erzeugter Neutronen,

h) für jedes einer Vielzahl der erfassten Neutronen erfolgendes Bestimmen der Energie des erfassten Neutrons,

i) für jede vorab bestimmte Photonengrenzenergie erfolgendes Bestimmen einer Neutronenmenge in einer der Neutronenerfassungseinrichtungen in einer Vielzahl vorab bestimmter Neutronenenergiebereiche,

j) für jeden vorab bestimmten Neutronenenergiebereich erfolgendes Bestimmen einer Neutronenmengenkurve in Abhängigkeit von der Photonengrenzenergie und

k) auf Grundlage eines Vergleichens der bestimmten Neutronenmengenkurven in der einen Neutronenerfassungseinrichtung für die vorab bestimmten Neutronenenergiebereiche erfolgendes Bestätigen, dass das das vorhandene Actinoid umfassende Material in dem Behälter vorhanden ist, falls sich die Neutronenmengenkurven in Abhängigkeit von der Neutronenenergie um nicht mehr als einen vorab bestimmten Betrag ändern.

6. Verfahren nach einem der vorhergehenden Ansprüche, wobei das Bestimmen der Energie eines erfassten Neutrons ein Bestimmen einer Mindestenergie des erfassten Neutrons umfasst.

7. Verfahren nach Anspruch 1 oder 6, ferner umfassend:

f) für mindestens einen neuen Winkel relativ zu dem Photonenstrahl

i) Bewegen mindestens einer der Neutronenerfassungseinrichtungen (610, 611, 612, 613; 801, 802) derart, dass die bewegte Neutronenerfassungseinrichtung den Behälter aus dem neuen Winkel relativ zu dem Photonenstrahl (607; 807) betrachtet,

ii) Beleuchten zumindest eines Abschnitts des Behälters mit dem Photonenstrahl, der Photonen mit Energien umfasst, die nicht größer sind als die vorab bestimmte Photonengrenzenergie,

iii) in der mindestens einen bewegten Neutronenerfassungseinrichtung (610, 611, 612, 613; 801, 802) erfolgendes Erfassen zumindest einiger durch eine Wechselwirkung des Photonenstrahls mit zumindest einem Abschnitt des Behälters erzeugter Neutronen und

iv) für jedes einer Vielzahl der erfassten Neutronen erfolgendes Bestimmen der Energie des erfassten Neutrons,

g) für zumindest einige der Neutronenerfassungseinrichtungs-Betrachtungswinkel relativ zu dem Photonenstrahl (607; 807) erfolgendes Bestimmen einer Neutronengesamtmenge in der mindestens einen bewegten Neutronenerfassungseinrichtung in einem vorab bestimmten Neutronenenergiebereich in dem Winkel relativ zu dem Photonenstrahl und

h) auf Grundlage eines Vergleichens der Neutronengesamtmengen aus der mindestens einen bewegten Neutronenerfassungseinrichtung für zumindest einige der Neutronenerfassungseinrichtungs-Betrachtungswinkel relativ zu dem Photonenstrahl erfolgendes Bestimmen, dass es sich bei dem vorhandenen Actinoid um ein Ungerade-gerade-Isotop handelt, falls die Gesamtmengen in Abhängigkeit vom Winkel relativ zu dem Photonenstrahl eine isotrope Verteilung von Neutronen offenbaren, und Bestimmen, dass es sich bei dem vorhandenen Actinoid um ein Gerade-gerade-Isotop handelt, falls die Gesamtmengen in Abhängigkeit vom Winkel relativ zu dem Photonenstrahl eine anisotrope Verteilung von Neutronen offenbaren.

8. Verfahren nach Anspruch 1 oder 6, ferner umfassend:

f) für mindestens einen neuen Winkel relativ zu dem Photonenstrahl (607; 807),

i) Bewegen mindestens einer der Neutronenerfassungseinrichtungen (610, 611, 612, 613; 801, 802) derart, dass die bewegte Neutronenerfassungseinrichtung den Behälter (606; 806) aus dem neuen Winkel relativ zu dem Photonenstrahl (607; 807) betrachtet,

ii) Beleuchten zumindest eines Abschnitts des Behälters (606; 806) mit dem Photonenstrahl (607; 807), der Photonen mit Energien umfasst, die nicht größer sind als die erste vorab bestimmte Photonengrenzenergie,

iii) in der mindestens einen bewegten Neutronenerfassungseinrichtung (610, 611, 612, 613; 801, 802) erfolgendes Erfassen zumindest einiger durch eine Wechselwirkung des Photonenstrahls mit zumindest einem Abschnitt des Behälters erzeugter Neutronen und

iv) für jedes einer Vielzahl der erfassten Neutronen erfolgendes Bestimmen der Energie des erfassten Neutrons,

g) für zumindest einige der Neutronenerfassungseinrichtungs-Betrachtungswinkel relativ zu dem Photonenstrahl erfolgendes Bestimmen einer Neutronenenergieverteilung in der mindestens einen bewegten Neutronenerfassungseinrichtung in einem vorab bestimmten Neutronenenergiebereich in dem Winkel relativ zu dem Photonenstrahl und

h) auf Grundlage eines Vergleichens der Neutronenenergieverteilungen aus der mindestens einen bewegten Neutronenerfassungseinrichtung für zumindest einige der Neutronenerfassungseinrichtungs-Betrachtungswinkel relativ zu dem Photonenstrahl erfolgendes Bestimmen, dass es sich bei dem vorhandenen Actinoid um ein Ungerade-gerade-Isotop handelt, falls sich die Energieverteilungen in Abhängigkeit vom Winkel relativ zu dem Photonenstrahl um nicht mehr als einen vorab bestimmten Betrag ändern, und Bestimmen, dass es sich bei dem vorhandenen Actinoid um ein Gerade-gerade-Isotop handelt, falls sich die Energieverteilungen in Abhängigkeit vom Winkel relativ zu dem Photonenstrahl um mehr als einen vorab bestimmten Betrag ändern.

9. Verfahren nach Anspruch 1 oder 6, wobei es sich bei dem Photonenstrahl (607; 807), der Photonen mit Energien umfasst, die nicht größer sind als die vorab bestimmte Photonengrenzenergie, um einen durch Elektronen der vorab bestimmten Grenzenergie erzeugten Bremsstrahl oder einen monochromatischen Photonenstrahl handelt.

10. Verfahren nach Anspruch 1 oder 6, wobei das Bestimmen der Energie des erfassten Neutrons ein Messen einer Laufzeit des erfassten Neutrons umfasst.

11. Verfahren nach Anspruch 1 oder 6, wobei das Bestimmen der Energie des erfassten Neutrons ein Analysieren der in mindestens einer der Neutronenerfassungseinrichtungen (610, 611, 612, 613; 801, 802) entladenen Energie umfasst.

## Revendications

1. Procédé de détection de la présence d'un matériau (608 ; 808) comprenant un actinide dans un contenant (606 ; 806), comprenant :

a) le positionnement du contenant (606 ; 806) de telle sorte qu'au moins un détecteur de neutrons (610, 611, 612, 613 ; 801, 802) voie le premier contenant à un premier angle par rapport au faisceau de photons (607 ; 807) ;
b) l'éclairage d'au moins une partie dudit contenant (606 ; 806) avec un faisceau de photons (607 ; 807) comprenant des photons d'énergies ne dépassant pas une énergie photonique de coupure prédéterminée ;
c) la détection, dans au moins dit détecteur de neutrons (610, 611, 612, 613 ; 801, 802), d'au moins certains neutrons produits par une interaction dudit faisceau de photons avec au moins une partie dudit contenant ;
d) pour chacun d'une pluralité desdits neutrons détectés, la détermination de l'énergie dudit neutron détecté ; et
e) sur la base du fait que l'énergie déterminée d'au moins un desdits neutrons détectés dépasse une valeur prédéterminée, l'identification du matériau comprenant l'actinide comme présent dans le contenant ;

caractérisé en ce que la valeur prédéterminée est une différence entre l'énergie photonique de coupure prédéterminée et une énergie inférieure ; et
dans lequel l'énergie inférieure est l'une des suivantes : une énergie seuil pour la production de neutrons par un processus $(\gamma,n)$ dans un matériau spécifié, pas plus d'une énergie seuil pour la production de neutrons par un processus $(\gamma,n)$ dans un matériau spécifié, une quantité prédéterminée inférieure à une énergie seuil pour la production de neutrons par un processus $(\gamma,n)$ dans un matériau spécifié, et déterminée sur la base de matériaux potentiellement présents ou présents dans le contenant.

2. Procédé de la revendication 1, dans lequel le contenant (606 ; 806) est positionné de telle sorte qu'au moins deux détecteurs de neutrons (610, 611, 612, 613 ; 801, 802) voient ledit contenant, lesdits détecteurs de neutrons voyant le contenant depuis différents angles par rapport au faisceau de photons (607 ; 807), et des neutrons étant détectés dans au moins deux dits détecteurs de neutrons (610, 611, 612, 613 ; 801, 802) ; comprenant en outre :

f) la détermination d'un rendement neutronique total dans au moins deux desdits détecteurs de neutrons (610, 611, 612, 613 ; 801, 802) dans une gamme d'énergie neutronique prédéterminée et
g) sur la base d'une comparaison desdits rendements neutroniques totaux issus desdits au moins deux détecteurs de neutrons (610, 611, 612, 613 ; 801, 802) voyant le contenant depuis différents angles par rapport au faisceau de photons, la détermination que l'actinide présent est un isotope impair-pair si les rendements totaux révèlent une distribution isotrope de neutrons en fonction de l'angle par rapport au faisceau de photons, et la détermination que l'actinide présent est un isotope pair-pair si les rendements totaux révèlent une distribution anisotrope de neutrons en fonction de l'angle par rapport au faisceau de photons ; ou

f) la détermination d'une distribution d'énergie neutronique dans au moins deux desdits détecteurs de neutrons (610, 611, 612, 613 ; 801, 802) et

g) sur la base d'une comparaison desdites distributions d'énergie neutronique issues desdits au moins deux détecteurs de neutrons (610, 611, 612, 613 ; 801, 802) voyant le contenant depuis différents angles par rapport au faisceau de photons (607 ; 807), la détermination que l'actinide présent est un isotope impair-pair si les distributions d'énergie ne changent pas de plus d'une quantité prédéterminée en fonction de l'angle par rapport au faisceau de photons, et la détermination que l'actinide présent est un isotope pair-pair si les distributions d'énergie changent de plus d'une quantité prédéterminée en fonction de l'angle par rapport au faisceau de photons.

3. Procédé de la revendication 1, comprenant en outre :

f) l'éclairage d'au moins une partie dudit contenant (606) avec au moins un faisceau de photons supplémentaire (807B) comprenant des photons d'énergies ne dépassant pas une énergie photonique de coupure prédéterminée différente ;

g) la détection, dans au moins un dit détecteur de neutrons (610, 611, 612, 613 ; 801, 802), d'au moins certains neutrons produits par une interaction dudit faisceau de photons avec au moins une partie dudit contenant ;

h) pour chacun d'une pluralité desdits neutrons détectés, la détermination de l'énergie dudit neutron détecté ;

i) le choix d'une région d'énergie neutronique supérieure où des neutrons issus d'un processus $(\gamma,n)$ ne sont pas énergétiquement autorisés pour l'une quelconque desdites énergies photoniques de coupure prédéterminées, et d'une région d'énergie inférieure où des neutrons issus d'un processus $(\gamma,n)$ sont énergétiquement autorisés pour la totalité desdites énergies photoniques de coupure prédéterminées ;

j) pour chaque dite énergie photonique de coupure prédéterminée, la détermination d'un rendement neutronique dans un desdits détecteurs de neutrons dans au moins deux gammes d'énergie neutronique prédéterminées, au moins une gamme d'énergie neutronique prédéterminée englobant la région d'énergie supérieure où des neutrons issus d'un processus $(\gamma,n)$ ne sont pas énergétiquement autorisés ; et au moins une autre gamme d'énergie neutronique prédéterminée englobant la région d'énergie inférieure où des neutrons issus d'un processus $(\gamma,n)$ sont énergétiquement autorisés ; et

k) sur la base d'une comparaison desdits rendements neutroniques déterminés dans ledit détecteur de neutrons, résultant desdits faisceaux de photons incidents comprenant des photons d'énergies ne dépassant pas lesdites énergies de coupure prédéterminées différentes, la confirmation que le matériau comprenant l'actinide présent est présent dans le contenant si une augmentation dudit rendement neutronique entre une énergie photonique de coupure prédéterminée inférieure et une énergie photonique de coupure prédéterminée supérieure, dans la gamme d'énergie neutronique prédéterminée supérieure où des neutrons issus d'un processus $(\gamma,n)$ ne sont pas énergétiquement autorisés, n'est pas importante par rapport à une augmentation du rendement neutronique dans la gamme d'énergie neutronique prédéterminée inférieure où des neutrons issus d'un processus $(\gamma,n)$ sont énergétiquement autorisés.

4. Procédé de la revendication 1, comprenant en outre :

f) l'éclairage d'au moins une partie dudit contenant (606 ; 806) avec au moins un faisceau de photons supplémentaire (807B) comprenant des photons d'énergies ne dépassant pas une énergie photonique de coupure prédéterminée différente ;

g) la détection, dans au moins un dit détecteur de neutrons (610, 611, 612, 613 ; 801, 802), d'au moins certains neutrons produits par une interaction dudit faisceau de photons avec au moins une partie dudit contenant ;

h) pour chacun d'une pluralité desdits neutrons détectés, la détermination de l'énergie dudit neutron détecté ;

i) pour au moins deux desdites énergies photoniques de coupure prédéterminées, la détermination d'une distribution d'énergie neutronique dans un desdits détecteurs de neutrons ; et

j) sur la base d'une comparaison desdites distributions d'énergie neutronique déterminées dans ledit détecteur de neutrons (610, 611, 612, 613 ; 801, 802), résultant desdits faisceaux de photons incidents comprenant des photons d'énergies ne dépassant pas lesdites énergies de coupure prédéterminées différentes, la confirmation que le matériau comprenant l'actinide présent est présent dans le contenant si lesdites distributions d'énergie neutronique ne changent pas de plus d'une quantité prédéterminée en fonction de l'énergie photonique de coupure.

5. Procédé de la revendication 1, comprenant en outre :

f) l'éclairage d'au moins une partie dudit contenant (606 ; 806) avec au moins un faisceau de photons supplémentaire (807B) comprenant des photons d'énergies ne dépassant pas une énergie photonique de coupure prédéterminée différente ;

g) la détection, dans au moins un dit détecteur de neutrons (610, 611, 612, 613 ; 801, 802), d'au moins certains neutrons produits par une interaction dudit faisceau de photons avec au moins une partie dudit contenant ;

h) pour chacun d'une pluralité desdits neutrons détectés, la détermination de l'énergie dudit neutron détecté ;

i) pour chaque dite énergie photonique de coupure prédéterminée, la détermination d'un rendement neutronique dans un desdits détecteurs de neutrons dans une pluralité de gammes d'énergie neutronique prédéterminées ;

j) pour chaque dite gamme d'énergie neutronique prédéterminée, la détermination d'une courbe de rendement neutronique en fonction de l'énergie photonique de coupure ; et

k) sur la base d'une comparaison desdites courbes de rendement neutronique déterminées dans ledit détecteur de neutrons pour lesdites gammes d'énergie neutronique prédéterminées, la confirmation que le matériau comprenant l'actinide présent est présent dans le contenant si lesdites courbes de rendement neutronique ne changent pas de plus d'une quantité prédéterminée en fonction de l'énergie neutronique.

**6.** Procédé selon une quelconque revendication précédente dans lequel la détermination de l'énergie d'un neutron détecté comprend la détermination d'une énergie minimale dudit neutron détecté.

**7.** Procédé de la revendication 1 ou 6, comprenant en outre :

f) pour au moins un nouvel angle par rapport au faisceau de photons,

i) le déplacement d'au moins un desdits détecteurs de neutrons (610, 611, 612, 613 ; 801, 802) de telle sorte que ledit détecteur de neutrons déplacé voie ledit contenant depuis ledit nouvel angle par rapport au faisceau de photons (607 ; 807) ;

ii) l'éclairage d'au moins une partie dudit contenant avec le faisceau de photons comprenant des photons d'énergies ne dépassant pas l'énergie photonique de coupure prédéterminée ;

iii) la détection, dans ledit au moins un détecteur de neutrons déplacé (610, 611, 612, 613 ; 801, 802), d'au moins certains neutrons produits par une interaction dudit faisceau de photons avec au moins une partie dudit contenant ; et

iv) pour chacun d'une pluralité desdits neutrons détectés, la détermination de l'énergie dudit neutron détecté ;

g) pour au moins certains desdits angles de vue de détecteur de neutrons par rapport au faisceau de photons (607 ; 807), la détermination d'un rendement neutronique total dans ledit au moins un détecteur de neutrons déplacé dans une gamme d'énergie neutronique prédéterminée audit angle par rapport au faisceau de photons ; et

h) sur la base d'une comparaison desdits rendements neutroniques totaux, issus dudit au moins un détecteur de neutrons déplacé, pour au moins certains des angles de vue de détecteur de neutrons par rapport au faisceau de photons, la détermination que l'actinide présent est un isotope impair-pair si les rendements totaux révèlent une distribution isotrope de neutrons en fonction de l'angle par rapport au faisceau de photons, et la détermination que l'actinide présent est un isotope pair-pair si les rendements totaux révèlent une distribution anisotrope de neutrons en fonction de l'angle par rapport au faisceau de photons.

**8.** Procédé de la revendication 1 ou 6, comprenant en outre :

f) pour au moins un nouvel angle par rapport au faisceau de photons (607 ; 807),

i) le déplacement d'au moins un desdits détecteurs de neutrons (610, 611, 612, 613 ; 801, 802) de telle sorte que ledit détecteur de neutrons déplacé voie ledit contenant (606 ; 806) depuis ledit nouvel angle par rapport au faisceau de photons (607 ; 807) ;

ii) l'éclairage d'au moins une partie dudit contenant (606 ; 806) avec le faisceau de photons (607 ; 807) comprenant des photons d'énergies ne dépassant pas la première énergie photonique de coupure prédéterminée ;

iii) la détection, dans ledit au moins un détecteur de neutrons déplacé (610, 611, 612, 613 ; 801, 802), d'au moins certains neutrons produits par une interaction dudit faisceau de photons avec au moins une partie dudit contenant ; et

iv) pour chacun d'une pluralité desdits neutrons détectés, la détermination de l'énergie dudit neutron détecté ;

g) pour au moins certains desdits angles de vue de détecteur de neutrons par rapport au faisceau de photons, la détermination d'une distribution d'énergie neutronique dans ledit au moins un détecteur de neutrons déplacé dans une gamme d'énergie neutronique prédéterminée audit angle par rapport au faisceau de photons ; et
h) sur la base d'une comparaison desdites distributions d'énergie neutronique, issues dudit au moins un détecteur de neutrons déplacé, pour au moins certains des angles de vue de détecteur de neutrons par rapport au faisceau de photons, la détermination que l'actinide présent est un isotope impair-pair si les distributions d'énergie ne changent pas de plus d'une quantité prédéterminée en fonction de l'angle par rapport au faisceau de photons, et la détermination que l'actinide présent est un isotope pair-pair si les distributions d'énergie changent de plus d'une quantité prédéterminée en fonction de l'angle par rapport au faisceau de photons.

9. Procédé de la revendication 1 ou 6, dans lequel le faisceau de photons (607 ; 807) comprenant des photons d'énergies ne dépassant pas l'énergie photonique de coupure prédéterminée est un faisceau de freinage produit par des électrons de l'énergie de coupure prédéterminée ou d'un faisceau monochromatique de photons.

10. Procédé de la revendication 1 ou 6, dans lequel la détermination de l'énergie dudit neutron détecté comprend la mesure d'un temps de vol dudit neutron détecté.

11. Procédé de la revendication 1 ou 6, dans lequel la détermination de l'énergie dudit neutron détecté comprend l'analyse de l'énergie déposée dans au moins un desdits détecteurs de neutrons (610, 611, 612, 613 ; 801, 802) .

**Figure 1A.** Mass Yield and Neutron Multiplicity For $^{235}$U Neutron-Induced Fission

**Figure 1B.** Mass Yield and Neutron Multiplicity For $^{239}$Pu Neutron-Induced Fission

**Figure 2.**    **Neutron Time of Flight (Energy) Spectrum For $^{232}$Th Photo-Fission**

Figure 3.  Neutron Energy Spectrum For 14.3 MeV and 15.8 MeV
Bremsstrahlung Spectrum Incident on Gold

Figure 4A    Photo-fission Yield for
$^{235}$U as a Function of
Bremsstrahlung
Endpoint Energy

Figure 4B    Photo-fission Yield for
$^{239}$Pu as a Function of
Bremsstrahlung
Endpoint Energy

Figure 5A
Total

Figure 5B
n

Figure 5C
2n

Figure 5D
f

Figure 5.      Photon-Induced Reaction Cross Sections For $^{239}$Pu

**Figure 6      Detector System**

**Figure 7**      **Angular Distribution of Neutrons From Photo-fission: $^{232}$Th and $^{238}$U at Different Energies**

EP 2 171 723 B1

Figure 8A   Detector Geometry

Figure 8B   Detector Geometry

33

**Figure 9    Angular Distribution of Fission Fragments From Photo-fission: $^{232}$Th and $^{238}$U at Different Energies**

Figure 10    (n, f) Cross Section for $^{238}$U at Different Incident Neutron Energies

Figure 11    Photon and neutron pulse-shape discriminated energy spectra from
HEU and Pb targets irradiated with 9 MeV bremsstrahlung beam.

## REFERENCES CITED IN THE DESCRIPTION

### Patent documents cited in the description

- US 94400907
- US 97163807

### Non-patent literature cited in the description

- **B W BLACKBURN et al.** Utilization of actively-induced, prompt radiation emission for nonproliferation applications. *NUCLEAR INSTRUMENTS & METHODS IN PHYSICS RESEARCH. SECTION B: BEAM INTERACTIONS WITH MATERIALS AND ATOMS,* 01 May 2007, vol. 261 (1), 341-346
- **BOHR ; MOTTELSON.** Nuclear Structure. World Scientific Publishing Co. Pte. Ltd, 1998
- **J. TERRELL.** Neutron Yields from Individual Fission Fragments. *Physical Review,* 01 August 1962, vol. 127 (3), 880-904
- **HARRY R. BOWMAN ; STANLEY G. THOMPSON ; J. C. D. MILTON ; J. SWIATECKI.** Velocity and Angular Distributions of Prompt Neutrons from Spontaneous Fission of Cf. *Phys. Rev.,* 15 June 1962, vol. 126 (6), 2120-2136
- **H. W. SCHMITT ; J. H. NEILER ; F. J. WALTER.** Fragment Energy Correlation Measurements for Cf Spontaneous Fission and U Thermal-Neutron Fission. *Phys. Rev.,* January 1966, vol. 141 (3), 1146-1160
- **C. P. SARGENT ; W. BERTOZZI ; P. T. DEMOS ; J. L. MATTHEWS ; W. TURCHINETZ.** Prompt Neutrons from Thorium Photofission. *Physical Review,* 11 January 1965, vol. 137 (1B), B89-B101
- **E. J. WINHOLD ; P. T. DEMOS ; I. HALPERN.** *Physical Review,* 1952, vol. 87, 1139
- **A. P. BERG ; R. M. BARTHOLOMEW ; F. BROWN ; L. KATZ ; S. B. KOWALSKI.** *Canadian Journal of Physics,* 1959, vol. 37, 1418
- **S. NAIR ; D. B. GAYTHER ; B. H. PATRICK ; E. M. BOWEY.** *Journal of Physics, G: Nuclear Physics,* 1977, vol. 3 (7), 1965-1978
- **W. BERTOZZI ; F. R. PAOLINI ; C. P. SARGENT.** Time-of-Flight Measurements of Photoneutron Energy Spectra. *Physical Review,* 1958, vol. 119, 790
- **H. W. KOCH.** Experimental Photo-Fission Thresholds in U, U, U, Pu and Th. *Physical Review,* 1950, vol. 77, 329-336
- **B. L. BERMAN ; J. T. CALDWELL ; E. J. DOWDY ; S. S. DIETRICH ; P. MEYER ; R. A. ALVAREZ.** Photofission and photoneutron cross sections and photofission neutron multiplicities for U, U, Np and Pu. *Physical Review C,* 1986, vol. 34 (6), 2201-2214
- **L. P. GERALDO.** Angular Distribution of the Photofission Fragments of Np at Threshold Energy. *Journal of Physics G: Nuclear Physics,* 1986, vol. 12, 1423-1431
- **E. J. WINHOLD ; I. HALPERN.** *Physical Review,* 1956, vol. 103, 990-1000